# EUROPÄISCHE PATENTSCHRIFT

(11) **EP 2 194 457 B1**
(45) Veröffentlichungstag und Bekanntmachung des Hinweises auf die Patenterteilung: **19.09.2018**
(21) Anmeldenummer: 09015132.5
(22) Anmeldetag: 07.12.2009
(51) Int. Cl.: G06F 11/26

(54) **Vorrichtung zum Erzeugen eines markierten Referenzdatenstroms**
Device for creating a marked reference data stream
Dispositif de production d'un flux de données de référence marqué

(30) Priorität: 08.12.2008 DE 102008060970
(43) Veröffentlichungstag der Anmeldung: 09.06.2010
(73) Patentinhaber: Fraunhofer-Gesellschaft zur Förderung der angewandten Forschung e.V., 80686 München (DE)
(72) Erfinder: Eilers, Dirk, 81247 München (DE); Weiss, Gereon, 81369 München (DE)
(74) Vertreter: Zimmermann, Tankred Klaus

(56) Entgegenhaltungen:
- US-A1- 2006 212 759
- US-A1- 2006 282 419

## Beschreibung

Ausführungsbeispiele gemäß der Erfindung beziehen sich auf eine Vorrichtung zum Erzeugen eines markierten Referenzdatenstroms und auf ein Verfahren zum Erzeugen eines markierten Referenzdatenstroms.
Weitere Ausführungsbeispiele gemäß der Erfindung beziehen sich auf die Instrumentierung von Referenzmodellen für die Validierung.

Im Zuge des Erfolgs modellbasierter Entwicklungswerkzeuge werden immer häufiger Spezifikationen und erste Prototypen als ausführbares Modell erstellt. Die Prototypen werden in den meisten Fällen zur Validierung der Spezifikation im zukünftigen realen Umfeld benutzt und besitzen daher oft einen hohen Reifegrad. Geht man davon aus, dass das so entwickelte Modell die funktionale Spezifikation einer für den Serieneinsatz zu implementierenden Funktion (im Weiteren Testobjekt oder DUT, device under test, genannt) darstellt, ist der Anreiz, das prototypische Modell mit der fertigen Software-Komponente zu vergleichen, sehr hoch, um somit die Einhaltung der Spezifikation zu überprüfen.
Ein Problem dabei ist, dass die zu vergleichende Software-Komponente des DUT meist einen anderen funktionalen Aufbau besitzt und/oder nur die Binär-Files (Binär-Daten) vorhanden sind. Ein White-Box-Test (Weiße-Box-Test, Gegenüberstellung der Modelle auf funktionaler Ebene) ist somit nicht möglich. Betrachtet man aber das Verhalten von Funktionen auf bestimmte Eingangswerte (Testfall-Stimuli), so sollten die Ausgangswerte (Ergebnisse) des Referenz-Modells und der zu prüfenden Umsetzung auf dem DUT gleich oder zumindestens ähnlich sein.

Die Spezifikation lässt meist Spielräume, wodurch DUT und Prototyp (Referenzmodell) meist nicht genau übereinstimmen werden. Hierbei können die Ausgangswerte beispielsweise aufgrund paralleler Verhaltensweisen in einem bestimmten Rahmen nicht-deterministisch sein.

Ausgaben von Modell und DUT können in unterschiedlicher Reihenfolge erfolgen, obwohl sich beide spezifikationstreu verhalten. Somit ist durch einen geordneten Outputvergleich (Ausgangsdatenvergleich) keine Aussage über das Testergebnis möglich.

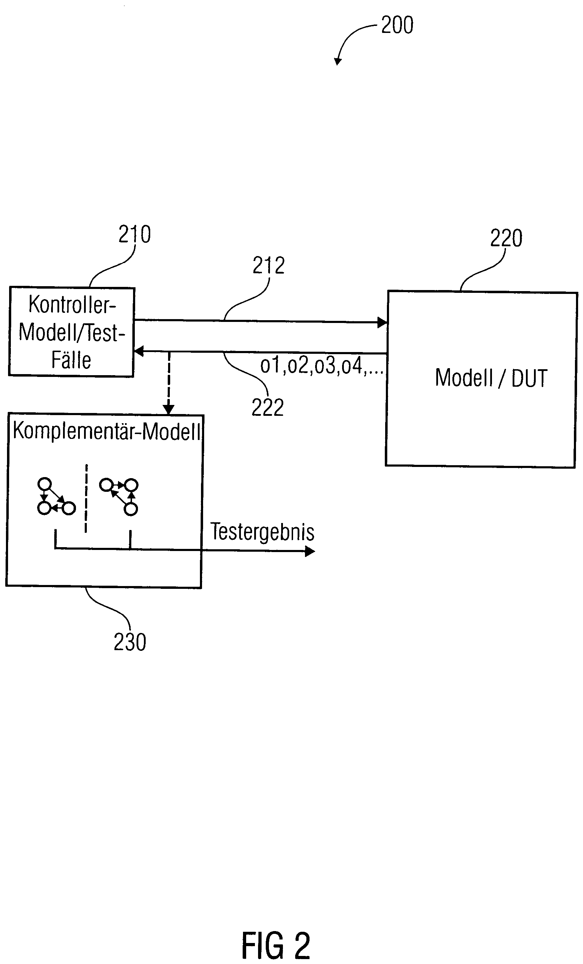

Beispielsweise wird bei einem bekannten Ansatz 200 ein so genanntes komplementäres Modell zum Testen eingesetzt, wie es z. B. in Fig. 2 gezeigt ist. Dieses Modell 230 erwartet die Ausgabe 222 des DUT 220 oder eines Modells als Eingabestimuli und validiert diese. Das DUT 220 wird von einem Controller 210 oder sonstigen Stimuli mit Testfällen oder ganz allgemein mit Eingangsdaten 212 angesteuert. Die Ausgabe 222 des DUT dient als Eingabe-Modell-Trigger (Modell-Auslöser) für das komplementäre Modell 230. Dazu muss ein zum Referenzmodell inverses Modell erzeugt werden. Erwartete Nachrichten des DUT werden im Modell 230 als Eingabe erwartet und validiert.

Ein Problem dabei ist, dass die aufwendige Erstellung eines neuen Modells notwendig ist, da eine automatische Generierung eines inversen Modells in der Praxis nicht möglich ist. Die Erkennung von abweichendem Verhalten des DUT muss explizit modelliert und validiert werden. Das neue Modell muss zusätzlich gewartet werden.

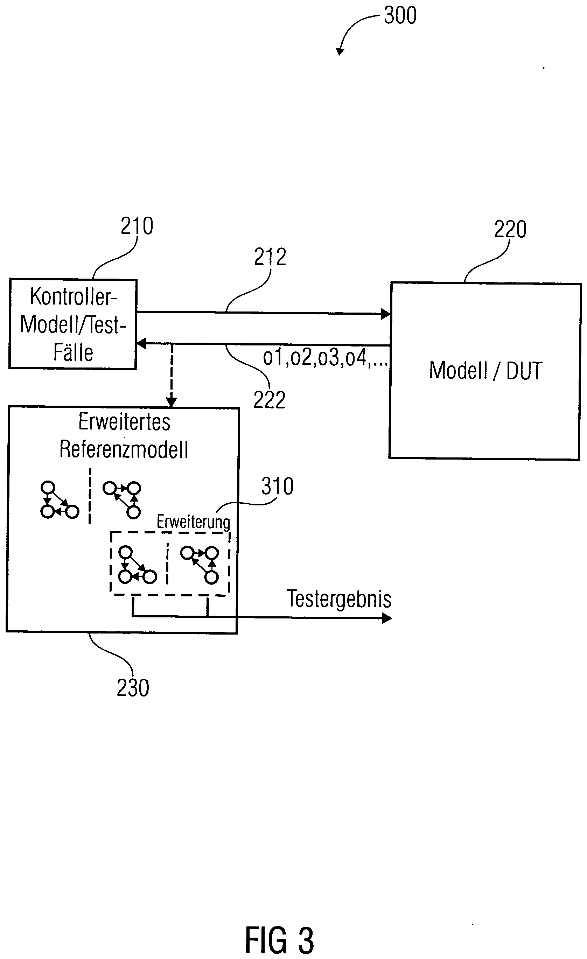

Ein weiterer bekannter Ansatz 300 bezieht sich auf eine Veränderung der Implementierung des Referenzmodells 230, wie es beispielsweise in Fig. 3 gezeigt ist. Das Referenzmodell 230 wird um Zustände 310 und Verhalten so verändert, dass innerhalb des Modells 230 die DUT-Ausgabe 222 validiert werden kann. Dafür muss das Referenzmodell 230 in einem für die Validierung erweiterten Modus die eigentliche Ausgabe als Eingabe validieren. Im Testaufbau dient die durch Stimuli 212 generierte Ausgabe 222 des DUT 220 als Eingabe für die veränderte Implementierung des Referenzmodells 230.

Ein Problem dabei ist beispielsweise, dass tief eingreifende Änderungen 310 am eigentlichen Referenzmodell notwendig sind. Die Erkennung von abweichendem Verhalten des DUT 220 muss explizit modelliert und validiert werden. Die Wartbarkeit des veränderten Referenzmodells 230 ist extrem aufwendig.

US-A-20060212759 offenbart ein Verfahren, bei dem das Testobjekt ein Software-System ist, welches eine Mehrzahl von Threads parallel oder seriell ausführt, wobei das Testobjekt instrumentiert wird und Ereignis-Log-Dateien erzeugt, die einer oder mehreren möglichen Teilordnungen der Threads entsprechen.

Ein Referenzmodell kann eine spezielle Ausprägung des zulässigen Systemverhaltens darstellen. Es kann also nicht immer davon ausgegangen werden, dass die zu testende Applikation (DUT) sich exakt so verhält wie das Referenzmodell. Vielmehr sind gewisse Abweichungen durchaus zulässig und auch oft nicht vermeidbar. Das Systemverhalten paralleler und zeitlich (z. B. von Verarbeitungsgeschwindigkeit oder Daten) abhängiger Funktionen weicht sogar in der Regel von Applikation und Referenzmodell ab. Durch unabhängig spezifizierte Teilfunktionen oder Parallelität im Referenzmodell bestehen teilweise Abhängigkeiten innerhalb der zu vergleichenden Ausgabedatenströme. Eine genaue Übereinstimmung beider Ausgangsdatenströme wird also kaum eintreten, vielmehr muss mit einer unscharfen Beurteilung der Übereinstimmung gerechnet werden.

Ein Referenzmodell kann beispielsweise aus mehreren Final State Machines oder Finite State Machines (FSM, endlicher Zustandsautomat, oder allgemein paralleles Teilmodell) aufweisen. Ausgaben aus parallelen Finite State Machines können sich überholen (races, laufzeitbedingtes Verhalten).

Durch unterschiedliches Timing (zeitliches Verhalten) der parallelen Teilmodelle sowie des Referenzmodells und des DUT kann die Reihenfolge der Ausgabe variieren. Innerhalb eines parallelen Teilmodells ist dagegen die Reihenfolge der Ausgabe geordnet.

Es ist daher beispielsweise wichtig festzustellen, ob mehrere Ausgaben von ein und demselben Teilmodell erzeugt wurden, und daher eine vorgeschriebene Reihenfolge im Ausgangsdatenstrom des Referenzmodells festgelegt ist, oder ob die Ausgaben von mehreren parallelen Teilmodellen erzeugt wurden, und daher die Reihenfolge des Auftretens der Ausgaben im Ausgangsdatenstrom des Referenzmodells nicht vorgeschrieben ist.

Die Aufgabe der vorliegenden Erfindung ist es, eine Vorrichtung zu schaffen, die ausgelegt ist, um eine Aussage zu ermöglichen, ob zwischen einzelnen Teilen eines Referenzdatenstroms eine zeitliche Reihenfolge des Auftretens der einzelnen Teile in dem Referenzdatenstrom vorgeschrieben ist.

Diese Aufgabe wird durch eine Vorrichtung gemäß Anspruch 1 und ein Verfahren gemäß Anspruch 11 und ein Computerprogramm gemäss Anspruch 12 gelöst.

Ein Ausführungsbeispiel gemäß der Erfindung schafft eine Vorrichtung zum Erzeugen eines markierten Referenzdatenstroms, wobei die Vorrichtung einen Referenzdatenerzeuger aufweist, der ausgelegt ist, um basierend auf einem Eingangsdatenstrom einen Referenzdatenstrom zu erzeugen. Der Referenzdatenstrom weist dabei eine Mehrzahl von Teilreferenzdatenströmen auf, wobei ein erster Teilreferenzdatenstrom eine erste Markierung und ein zweiter Teilreferenzdatenstrom eine zweite Markierung aufweist. Dabei geben die erste Markierung und die zweite Markierung an, ob eine zeitliche Reihenfolge zwischen einem Auftreten des ersten Teilreferenzdatenstroms und einem Auftreten des zweiten Teilreferenzdatenstroms in dem Referenzdatenstrom vorgeschrieben ist.

Ausführungsbeispiele gemäß der Erfindung basieren auf dem Kerngedanken, dass bei der Erzeugung von Teilreferenzdatenströmen eines Referenzdatenstroms einem Teilreferenzdatenstrom eine Markierung hinzugefügt wird, wobei durch die Markierung bestimmt werden kann, ob eine zeitliche Reihenfolge des Auftretens des Teilreferenzdatenstroms in dem Referenzdatenstrom vorgeschrieben ist. Dadurch kann beispielsweise unterschieden werden, ob der Teilreferenzdatenstrom parallel zu einem weiteren Teilreferenzdatenstrom erzeugt wurde, und somit die Reihenfolge, welcher der beiden Teilreferenzdatenströme zuerst im Referenzdatenstrom von dem Referenzdatenerzeuger ausgegeben wird, nicht vorgeschrieben ist, oder ob die beiden Teilreferenzdatenströme eine vorgeschriebene Reihenfolge aufweisen, und daher von dem Referenzdatenerzeuger in dem Referenzdatenstrom in der vorgeschriebenen Reihenfolge ausgegeben werden müssen.

Einige weitere Ausführungsbeispiele gemäß der Erfindung schaffen ein Verfahren zum Erzeugen eines markierten Referenzdatenstroms, das ein Erzeugen eines Referenzdatenstroms basierend auf einem Eingangsdatenstrom umfasst. Dabei weist der Referenzdatenstrom eine Mehrzahl von Teilreferenzdatenströmen auf, wobei ein erster Teilreferenzdatenstrom eine erste Markierung und ein zweiter Teilreferenzdatenstrom eine zweite Markierung aufweist. Die erste Markierung und die zweite Markierung geben dabei an, ob eine zeitliche Reihenfolge zwischen einem Auftreten des ersten Teilreferenzdatenstroms und einem Auftreten des zweiten Teilreferenzdatenstroms in dem Referenzdatenstrom vorgeschrieben ist.

Einige Ausführungsbeispiele gemäß der Erfindung beziehen sich auf eine Vorrichtung zum Testen eines Testobjekts mit einer Vorrichtung zum Erzeugen eines markierten Referenzdatenstroms.

Einige weitere Ausführungsbeispiele gemäß der Erfindung beziehen sich auf ein Verfahren zum Testen eines Testobjekts.

Ausführungsbeispiele gemäß der Erfindung werden nachfolgend Bezug nehmend auf die beiliegenden Figuren näher erläutert. Es zeigen:
- Fig. 1: eine schematische Darstellung einer Vorrichtung zum Erzeugen eines markierten Referenzdatenstroms;
- Fig. 2: eine schematische Darstellung eines bekannten Ansatzes zum Testen eines Testobjekts mit Hilfe eines komplementären Modells;
- Fig. 3: eine schematische Darstellung eines bekannten Ansatzes zum Testen eines Testobjekts mit Hilfe einer veränderten Implementierung eines Referenzmodells;
- Fig. 4: eine schematische Darstellung einer Vorrichtung zum Testen eines Testobjekts mit einer Vorrichtung zum Erzeugen eines markierten Referenzdatenstroms;
- Fig. 5: eine schematische Darstellung einer Vorrichtung zum Testen eines Testobjekts mit einer Vorrichtung zum Erzeugen eines markierten Referenzdatenstroms;
- Fig. 6: eine schematische Darstellung einer Vorrichtung zum Testen eines Testobjekts mit einer Vorrichtung zum Erzeugen eines markierten Referenzdatenstroms;
- Fig. 7: eine schematische Darstellung einer Vorrichtung zum Testen eines Testobjekts mit einer Vorrichtung zum Erzeugen eines markierten Referenzdatenstroms;
- Fig. 8: eine schematische Darstellung einer Vorrichtung zum Testen eines Testobjekts mit einer Vorrichtung zum Erzeugen eines markierten Referenzdatenstroms;
- Fig. 9: eine schematische Darstellung eines Zustandsdiagramms mit einem möglichen Markierungsansatz;
- Fig. 10: eine schematische Darstellung eines Zustandsdiagramms mit einem möglichen Markierungsansatz;
- Fig. 11: ein schematischer Systemaufbau einer Implementierung einer Vorrichtung zum Testen eines Testobjekts mit einer Vorrichtung zum Erzeugen eines markierten Referenzdatenstroms in einem MOSTSystem (Multimedia Oriented Systems Transportation, multimediaorientierter System-Transport);
- Fig. 12: eine schematische Darstellung eines physikalischen Aufbaus einer Vorrichtung zum Testen eines Testobjekts mit einer Vorrichtung zum Erzeugen eines markierten Referenzdatenstroms in einem MOST-System;
- Fig. 13: eine schematische Darstellung eines Ablaufs einer Validierung eines Testobjekts mit einer Vorrichtung zum Testen eines Testobjekts mit einer Vorrichtung zum Erzeugen eines markierten Referenzdatenstroms in einem MOST-System;
- Fig. 14: eine schematische Darstellung eines getriggerten (ausgelösten) Funktionsaufrufs des Analysemoduls bei einer Vorrichtung zum Testen eines Testobjekts mit einer Vorrichtung zum Erzeugen eines markierten Referenzdatenstroms in einem MOST-System;
- Fig. 15: eine schematische Darstellung eines Sequenzablaufs einer Validierung bei einem erwarteten Ereignis bei einer Vorrichtung zum Testen eines Testobjekts mit einer Vorrichtung zum Erzeugen eines markierten Referenzdatenstroms in einem MOST-System; und
- Fig. 16: ein Flussdiagramm eines Verfahrens zum Testen eines Testobjekts.

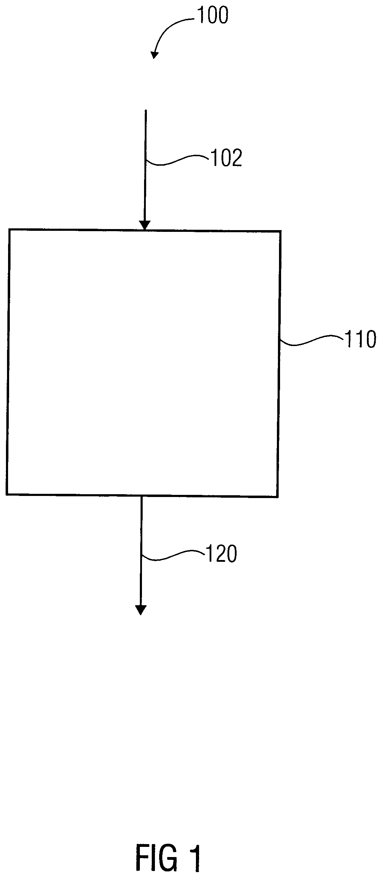

Fig. 1 zeigt eine schematische Darstellung einer Vorrichtung 100 zum Erzeugen eines markierten Referenzdatenstroms 120 entsprechend einem Ausführungsbeispiel gemäß der Erfindung. Die Vorrichtung 100 weist dabei einen Referenzdatenerzeuger 110 auf, der ausgelegt ist, um basierend auf einem Eingangsdatenstrom 102 einen Referenzdatenstrom 120 zu erzeugen. Der Referenzdatenstrom 120 umfasst eine Mehrzahl von Teilreferenzdatenströmen, wobei ein erster Teilreferenzdatenstrom eine erste Markierung und ein zweiter Teilreferenzdatenstrom eine zweite Markierung aufweist. Dabei geben die erste Markierung und die zweite Markierung an, ob eine zeitliche Reihenfolge zwischen einem Auftreten des ersten Teilreferenzdatenstroms und einem Auftreten des zweiten Teilreferenzdatenstroms in dem Referenzdatenstrom vorgeschrieben ist.

Durch die Markierungen der Teilreferenzdatenströme des Referenzdatenstroms kann somit festgestellt werden, ob die zeitliche Reihenfolge des Auftretens von zwei Teilreferenzdatenströmen in dem Referenzdatenstrom vorgeschrieben ist, oder ob die beiden Teilreferenzdatenströme von dem Referenzdatenerzeuger in dem Referenzdatenstrom in beliebiger Reihenfolge ausgegeben werden können.

Beispielsweise dürfen Teilreferenzdatenströme, die von parallel arbeitenden Teilen des Referenzdatenerzeugers erzeugt wurden, in beliebiger zeitlicher Reihenfolge zueinander in dem Referenzdatenstrom auftreten. Hingegen ist die zeitliche Reihenfolge des Auftretens von Teilreferenzdatenströmen, die von ein und demselben Teil des Referenzdatenerzeugers erzeugt wurden, vorgeschrieben.

Ist eine zeitliche Reihenfolge für zwei Teilreferenzdatenströme vorgeschrieben, kann durch die Markierungen der beiden Teilreferenzdatenströme beispielsweise festgestellt werden, in welcher zeitlichen Reihenfolge die beiden Teilreferenzdatenströme in dem Referenzdatenstrom auftreten müssen.

Bei einigen Ausführungsbeispielen gemäß der Erfindung umfasst der Referenzdatenerzeuger eine Mehrzahl von Teilreferenzdatenerzeugern. Eine Markierung eines Teilreferenzdatenstroms kann dabei eine Information enthalten, von welchem Teilreferenzdatenerzeuger der Teilreferenzdatenstrom erzeugt wurde.

Parallel arbeitende Teilreferenzdatenerzeuger, die z. B. den zuvor erwähnten Teilen des Referenzdatenerzeugers entsprechen, können unabhängig voneinander Teilreferenzdatenströme erzeugen, für die daher keine zeitliche Reihenfolge des Auftretens in dem Referenzdatenstrom vorgeschrieben ist.

Teilreferenzdatenerzeuger können beispielsweise als endliche Zustandsautomaten (finite state machine) ausgeführt sein. Ein Teilreferenzdatenerzeuger kann dabei z. B. bei einem Übergang von einem ersten Zustand in einen zweiten Zustand einen Teilreferenzdatenstrom erzeugen. Der Teilreferenzdatenstrom kann wiederum eine Mehrzahl von Übergangsteilreferenzdatenströmen aufweisen, wobei die Übergangsteilreferenzdatenströme ebenso eine Markierung aufweisen können. Die Markierung kann wiederum angeben, ob eine zeitliche Reihenfolge zwischen einem Auftreten der verschiedenen Übergangsteilreferenzdatenströme in dem Teilreferenzdatenstrom vorgeschrieben ist.

Wenn also zum Beispiel bei einem Zustandsübergang eines Teils des Referenzdatenerzeugers ein Teilreferenzdatenstrom erzeugt wird, der aus mehreren Teilen (Übergangsteilreferenzdatenströmen oder auch einfach Nachrichten genannt) besteht, können auch diese mit Markierungen versehen werden und dadurch angegeben werden, ob die Nachrichten in einer zeitlichen Reihenfolge in dem Referenzdatenstrom auftreten müssen oder ob die zeitliche Reihenfolge beliebig sein kann.

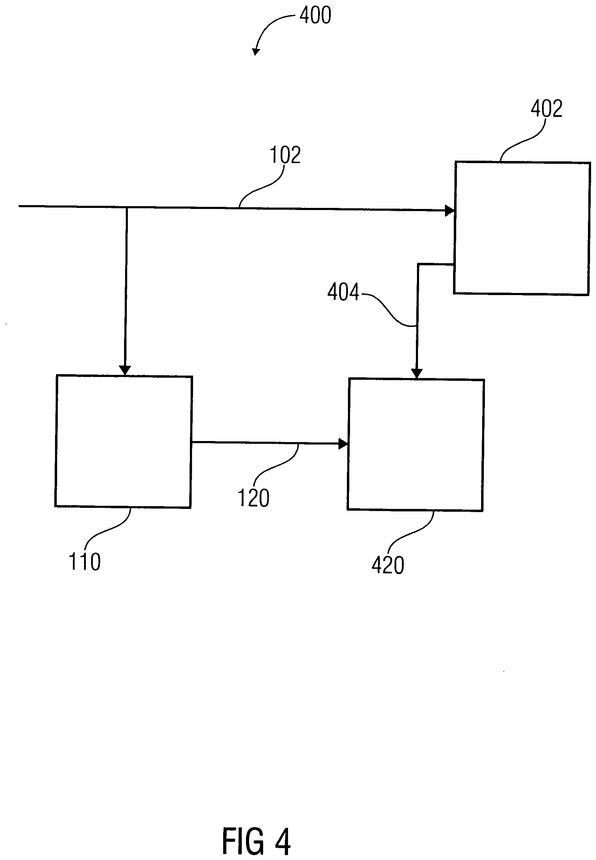

Fig. 4 zeigt eine schematische Darstellung einer Vorrichtung 400 zum Testen eines Testobjekts 402 mit einer Vorrichtung zum Erzeugen eines markierten Referenzdatenstroms 120 entsprechend einem Ausführungsbeispiel gemäß der Erfindung. Die Vorrichtung 400 zum Testen eines Testobjekts 402 umfasst dabei eine Vorrichtung zum Erzeugen eines markierten Referenzdatenstroms, wie beispielsweise in Fig. 1 gezeigt, und des Weiteren ein Analysemodul 420, das ausgelegt ist, um basierend auf dem Referenzdatenstrom 120 und einem Testobjektausgangsdatenstrom 404 eine Bewertung des Testobjekts 402 zu ermöglichen. Das Testobjekt 402 ist dabei ausgelegt, um basierend auf dem Eingangsdatenstrom 102 den Testobjektausgangsdatenstrom 404 zu erzeugen.

Dabei kann die Bewertung des Testobjekts 402 beispielsweise auf einem Vergleich des Referenzdatenstroms 120 und des Testobjektausgangsdatenstroms 404 basieren. Genauso wie der Referenzdatenstrom weist der Testobjektausgangsdatenstrom 404 eine Mehrzahl von Teiltestobjektausgangsdatenströmen auf. Das Analysemodul 420 kann somit z. B. die Teilreferenzdatenströme mit den Teiltestobjektausgangsdatenströmen vergleichen.

Dabei war bisher die Schwierigkeit, dass die Teilreferenzdatenströme und die Teiltestobjektausgangsdatenströme nicht die gleiche zeitliche Reihenfolge aufweisen mussten, da sich beispielsweise Teildatenströme von parallel arbeitenden Teilen des Referenzdatenerzeugers 110 sowie des Testobjekts 402 sich überholen können. Die zeitliche Reihenfolge von solchen Teildatenströmen muss nicht vorgeschrieben sein.

Durch die Markierung der Teilreferenzdatenströme kann nun das Analysemodul 420 bestimmen, ob eine Abweichung der zeitlichen Reihenfolge der Teiltestobjektausgangsdatenströme gegenüber den Teilreferenzdatenströmen durch ein fehlerhaftes Verhalten verursacht wurde oder die Abweichung erlaubt ist, da die unterschiedliche zeitliche Reihenfolge beispielsweise aufgrund von parallelen Arbeitsvorgängen erzeugt wurden.

Es kann also eine Zuordnung der beiden Ausgangsdatenströme erreicht werden, so dass ein Vergleich der Ausgabeverhaltensweisen möglich ist. Beispielsweise kann man drei Klassifizierungsmerkmale für eine Übereinstimmung der Ausgangsdatenströme deklarieren. Das sind z. B. die Reihenfolge (Muster) von bestimmten Nachrichten oder Teildatenströmen, das zeitliche Verhalten und eine Vollständigkeit gegenüber dem Referenz-Output (dem Referenzdatenstrom). Des Weiteren kann ein Datenstrom, wie bereits beschrieben, aus mehreren voneinander unabhängigen einzelnen Datenströmen (Teildatenströmen), welche jeweils einer einzelnen Funktion (Teil des Testobjekts oder des Referenzdatenerzeugers) zugeordnet sein können, bestehen.

Der Referenzdatenerzeuger 110 kann beispielsweise ein instrumentiertes Referenzmodell sein. Ein instrumentiertes Referenzmodell kann z. B. durch ein Anpassen eines bereits bestehenden Referenzmodells für das Testobjekt 402 (DUT) erstellt werden. Das Anpassen des Referenzmodells kann dabei beispielsweise durch ein Makro automatisiert werden.

Für das Hinzufügen der Markierungen in den Referenzdatenstrom 120 kann eine minimale Instrumentierung des Referenzmodells zur Erstellung des instrumentierten Referenzmodells (eines Referenzdatenerzeugers) ausreichen, die gegebenenfalls auch automatisch durch ein Makro generiert werden kann. Beispielsweise ist dies einfach möglich, wenn das Referenzmodell eine zentrale Ausgabe oder Sendefunktion hat, die jedes Mal aufgerufen wird, wenn ein Teil des Referenzmodells eine Nachricht oder einen Teildatenstrom ausgeben möchte. In diesem Fall kann an dieser Stelle des Referenzmodells eine Anpassung vorgenommen werden, so dass mit dem jeweiligen Teildatenstrom eine entsprechende Markierung ausgegeben wird.

Bei dem Testobjekt 402 kann es sich beispielsweise um einen Prototypen, ein anderes Modell oder allgemein um ein DUT handeln.

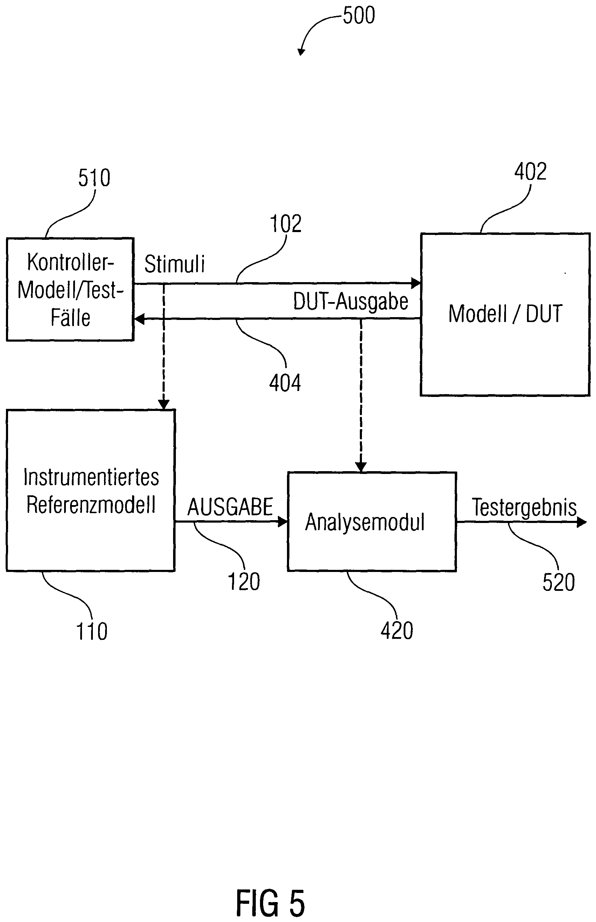

Fig. 5 zeigt eine schematische Darstellung einer Vorrichtung 500 zum Testen eines Testobjekts 402 mit einer Vorrichtung zum Erzeugen eines markierten Referenzdatenstroms 120 entsprechend einem Ausführungsbeispiel gemäß der Erfindung. Die gezeigte Vorrichtung 500 entspricht im Prinzip der zuvor in Fig. 4 gezeigten Vorrichtung. Zusätzlich ist ein Kontroller-Modell 510 oder Testfallgenerator gezeigt.

Durch den Testfallgenerator 510 kann beispielsweise der Eingangsdatenstrom 102, auch Stimuli genannt, bereitgestellt werden. Wiederum werden von dem Testobjekt 402 (z. B. Modell, DUT) und dem Referenzdatenerzeuger 110 (z. B. instrumentiertes Referenzmodell) ein Referenzdatenstrom 120 (Ausgabe Validierungsmodells oder Ausgabe des Referenzmodells an das Analysemodul, das auch als Validierungsmodell bezeichnet wird) und ein Testobjektausgangsdatenstrom 404 (z. B. DUT-Ausgabe) basierend auf dem Eingangsdatenstrom 102 erzeugt. Das Analysemodul 420 ist dabei ausgelegt, um basierend auf dem Referenzdatenstrom 120 und dem Testobjektausgangsdatenstrom 404 eine Bewertung des Testobjekts 402, beispielsweise in Form eines Testergebnisses 520, bereitzustellen.

Somit kann durch die beschriebene Vorrichtung ein Black-Box-Test (Schwarze-Box-Test) eines DUT durchgeführt werden.

Als Testobjekt 402 oder DUT kann beispielsweise ein zu testendes Gerät als auch ein Modell genutzt werden. Das Analysemodul 420 kann z. B. die Eingangsdatenströme 102 und die Ausgangsdatenströme des Referenzmodells 110 und der zu testenden Implementierung (Testobjekt) betrachten. Dabei können die Eingangssignale (der Eingangsdatenstrom) in Form von Stimuli, z. B. von einem Kontroller 510 oder Testgenerator, erzeugt werden. Wird eine Abweichung festgestellt, so kann das Systemverhalten (Eingangssignale und Ausgangssignale) und die erkannten Unterschiede aufgezeichnet werden.

Es erfolgt somit beispielsweise eine Ergänzung der Ausgabe (Referenzdatenstrom) um eine eindeutige Markierung oder Kennung für jeden parallelen endlichen Zustandsautomaten (allgemein paralleles Teilmodell, Teilreferenzdatenerzeuger). Dadurch wird eine zusätzliche Modellinformation zu den Modellausgabedaten durch eine ausreichend abstrakte Repräsentation in Form einer Markierung hinzugefügt. Diese Markierung kann z. B. zur Laufzeit erfolgen, falls die Modellinformationen während dieser in ausreichendem Maße zur Verfügung stehen. Sie kann statisch zur Entwurfszeit, beispielsweise auch automatisiert, wie z. B. durch Makros oder Skripting (Ausführen eines Skripts), erfolgen und nach Veränderung oder Anpassung des Modells (Referenzmodells) automatisiert aktualisiert werden. Beispielsweise können dadurch die Ausgabedaten für jedes parallele Teilmodell separiert ausgewertet werden.

Das Analysemodul 420 kann dann z. B. einen Vergleich der Ausgabedaten in geordneter Reihenfolge durchführen. Hierbei dürfen sich Ausgaben (Teildatenströme) überholen, sofern diese in unterschiedlichen parallelen Zustandsautomaten (FSM) generiert wurden. Innerhalb einer FSM bleibt die Reihenfolge erhalten. Ausgabedaten des DUT enthalten keine Markierung, so dass die Zuordnung geordnet erfolgen kann. Die Testaussage kann anhand dieses Vergleichs getroffen werden.

Ein Beispiel für einen Ablauf des beschriebenen Black-Box-Tests mit einer Vorrichtung zum Testen eines Testobjekts, wie beispielsweise in Fig. 5 gezeigt, beginnt mit dem Stimulieren des instrumentierten Referenzmodells 110 (des Referenzdatenerzeugers) und des DUT 402 (des Testobjekts) mit gleichen Eingabedaten. Die parallelen Ausgangsdatenströme (Teilreferenzdatenströme) des instrumentierten Referenzmodells 110 für die Validierung werden mit einer Markierung versehen. Die Ausgabe kann dabei direkt zum Analysemodul 420 umgeleitet werden. Unterscheiden sich die Ausgabedaten (des Referenzmodells und des DUT) im Format, können sie in ein einheitliches Datenformat transformiert werden. Das Analysemodul 420 vergleicht die ausgehenden Datenströme des DUT 402 und des instrumentierten Referenzmodells 110 miteinander.

Durch die Instrumentierung des Modells kann der Datenstrom des instrumentierten Referenzmodells beispielsweise in mehrere parallele Teildatenströme zerlegt werden. Diese können dann einzeln zum Beispiel auf die Einhaltung der Ordnung der zeitlichen Reihenfolge, das zeitliche Verhalten und/oder auf Vollständigkeit hin geprüft werden.

Eine Instrumentierung eines (bereits bestehenden) Referenzmodells kann somit beispielsweise durch ein Hinzufügen von einer Markierung erfolgen. Dadurch ergibt sich eine Wiederverwendbarkeit des Referenzmodells zum Testen eines DUT gegen ein ausgeführtes Modell. Dadurch kann es zu einer signifikanten Kosten- sowie Zeitersparnis und einem enormen Qualitätsgewinn kommen, da originale Referenzmodelle verwendet werden können und fehleranfällige Abänderungen der Modelle minimiert werden können.

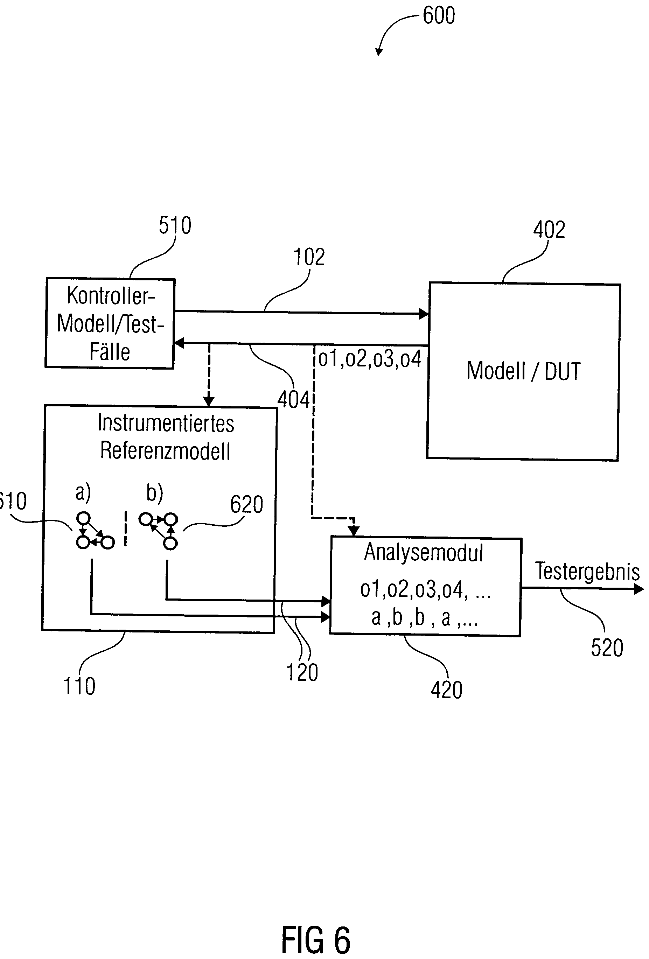

In Fig. 6 ist eine schematische Darstellung einer Vorrichtung 600 zum Testen eines Testobjekts 402 mit zwei eingezeichneten Teildatenströmen des Referenzdatenstroms 120 dargestellt. Die Vorrichtung 600 entspricht im Prinzip der in Fig. 5 gezeigten Vorrichtung.

Dabei ist schematisch gezeigt, dass das Analysemodul 420 Teiltestobjektausgangsdatenströme (o1, o2, o4, o3) mit Teilreferenzdatenströmen (a, b, b, a) des instrumentierten Referenzmodells 110 vergleicht. Die Teilreferenzdatenströme weisen in dem Beispiel je eine Markierung auf, die angibt, ob ein Teilreferenzdatenstrom von einem Teilmodell a 610 oder einem Teilmodell b 620 erzeugt wurde. In dem Beispiel würde der Teiltestobjektausgangsdatenstrom o3 nach dem Teiltestobjektausgangsdatenstrom o4 im Testobjektausgangsdatenstrom 404 auftreten. Das Analysemodul 420 kann jedoch beim Vergleich des Referenzdatenstroms 120 und des Testobjektausgangsdatenstroms 404 feststellen, dass die beiden Nachrichten im Referenzdatenstrom in umgekehrter Reihenfolge auftreten. Durch die Markierung der entsprechenden Teilreferenzdatenströme kann das Analysemodul 420 erkennen, dass die beiden Nachrichten von unterschiedlichen parallelen Teilmodellen (Teilreferenzdatenerzeugern) erzeugt wurden und somit eine beliebige zeitliche Reihenfolge aufweisen dürfen. Der Testobjektausgangsdatenstrom 404 entspricht daher in diesem Beispiel der Spezifikation, obwohl der Referenzdatenstrom 120 und der Testobjektausgangsdatenstrom 404 aufgrund der unterschiedlichen zeitlichen Reihenfolge der Teildatenströme nicht exakt übereinstimmen.

Durch die Markierung der Teilreferenzdatenströme kann also trotz unterschiedlicher Reihenfolge der Teildatenströme des Referenzdatenstroms 120 und des Testobjektausgangsdatenstroms 404 eine Bewertung des Testobjekts 402 durchgeführt werden. Es erfolgt somit ein Auflösen des Ausgabeverhaltens des parallel ausgeführten Modells 110 zum korrekten Vergleich der Ausgabe mit dem DUT 402. Dadurch kann das Zuordnungsproblem gelöst werden.

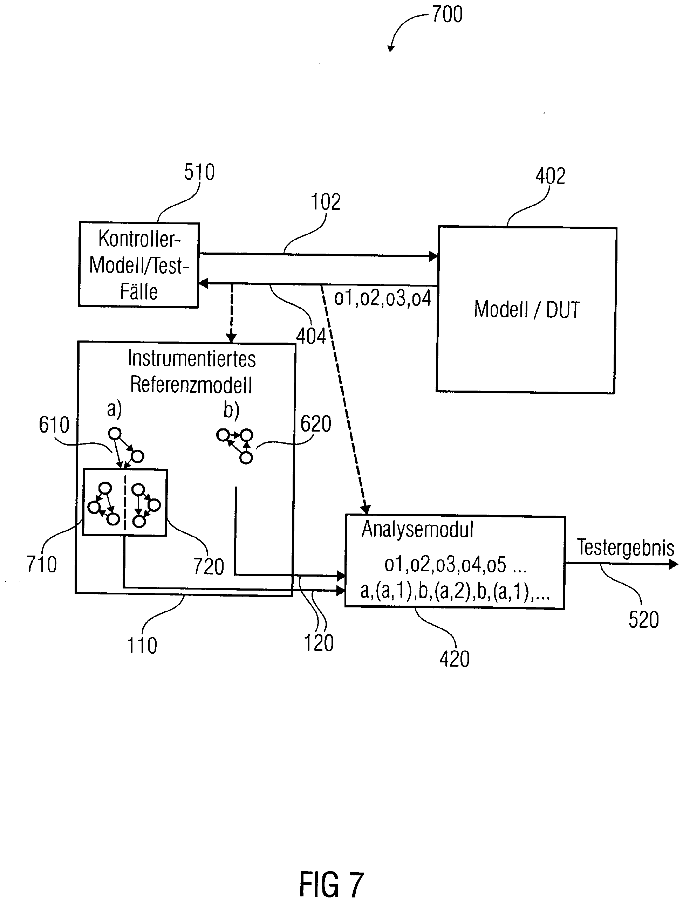

Fig. 7 zeigt eine schematische Darstellung einer Vorrichtung 700 zum Testen eines Testobjekts 402 mit einer Vorrichtung zum Erzeugen eines markierten Referenzdatenstroms 120 entsprechend einem Ausführungsbeispiel gemäß der Erfindung. Die Vorrichtung 700 entspricht prinzipiell der in Fig. 5 gezeigten Vorrichtung.

Es zeigt jedoch, wie beispielsweise hierarchisch geordnete Teile des Referenzmodells 110 berücksichtigt werden können. Hierarchisch geordnete Teilmodelle des Referenzmodells 110 (FSM) haben eine teilweise Abhängigkeit der Ausgabedaten zur Folge. Somit können z. B. Teildatenströme der Ausgabedaten, die selbst wieder aus unabhängigen Teildatenströmen bestehen, sequentiell abhängig sein. In anderen Worten, Teilreferenzdatenströme können Unterteilreferenzdatenströme aufweisen, die je nachdem, ob sie von Teilmodellen der gleichen Ebene der Hierarchie oder von Teilmodellen von unterschiedlichen Ebenen der Hierarchie stammen, eine vorgeschriebene zeitliche Reihenfolge aufweisen. Eine reine Markierung des parallelen Teilmodells reicht zur Zuordnung dieser nicht aus.

Eine Erweiterung der Markierung der Teildatenströme der Teilmodelle (FSM) um eine hierarchische Markierung ist jedoch einfach möglich. Ein Beispiel dafür ist in Fig. 7 dargestellt. Dabei ist eine erste hierarchische Ebene dargestellt, die Teilmodell a 610 und Teilmodell b 620 umfasst, und eine zweite hierarchische Ebene, die Teilmodell 1 710 und Teilmodell 2 720 als untergeordnete Teilmodelle von Teilmodell a 610 zeigt. Die Teilreferenzdatenströme erhalten dann beispielsweise eine Markierung a, wenn sie von Teilmodell a 610 erzeugt wurden, eine Markierung b, wenn sie von Teilmodell b 620 erzeugt wurden, eine Markierung (a,l), wenn sie von Teilmodell 1 710 erzeugt wurden, und eine Markierung (a,2), wenn sie von Teilmodell 2 720 erzeugt wurden.

Bei einigen Ausführungsbeispielen gemäß der Erfindung ist beispielsweise die Abhängigkeit von Teildatenströmen dann gegeben, wenn sie im gleichen Zustandsraum oder Unterzustandsraum ablaufen. In anderen Worten, eine zeitliche Reihenfolge ist z. B. dann vorgeschrieben, wenn Teildatenströme von ein und demselben hierarchischen Teilmodell erzeugt wurden. Dieser Zustandsraum und die Abhängigkeit der Zustandsräume untereinander sind zum Beispiel als Hierarchie (Unterzustände) in den Modellen dargestellt. Ein Zustandsraum repräsentiert beispielsweise die Gesamtheit aller Zustände, die Teilmodelle dieses Zustandsraums annehmen können. In einem Zustand oder innerhalb eines Effekts oder Übergangs werden Ausgabedaten als atomar, d. h. als unabhängig voneinander modelliert. In anderen Worten, werden von einem Teilmodell in einem bestimmten Zustand mehrere Teildatenströme erzeugt, so weisen diese Teildatenströme eine vorgeschriebene zeitliche Reihenfolge auf. Werden bei einem Übergang zwischen zwei Zuständen eines Teilmodells Teildatenströme erzeugt, so können auch diese Teildatenströme eine vorgeschriebene zeitliche Reihenfolge aufweisen. Parallel modelliertes Verhalten kann in explizit parallel modellierten Zustandsräumen oder Unterzustandsräumen stattfinden. Die Markierung wird beispielsweise für jeden Unterzustand um einen Eintrag erweitert, so dass die Hierarchie und Parallelität nachvollziehbar bleiben.

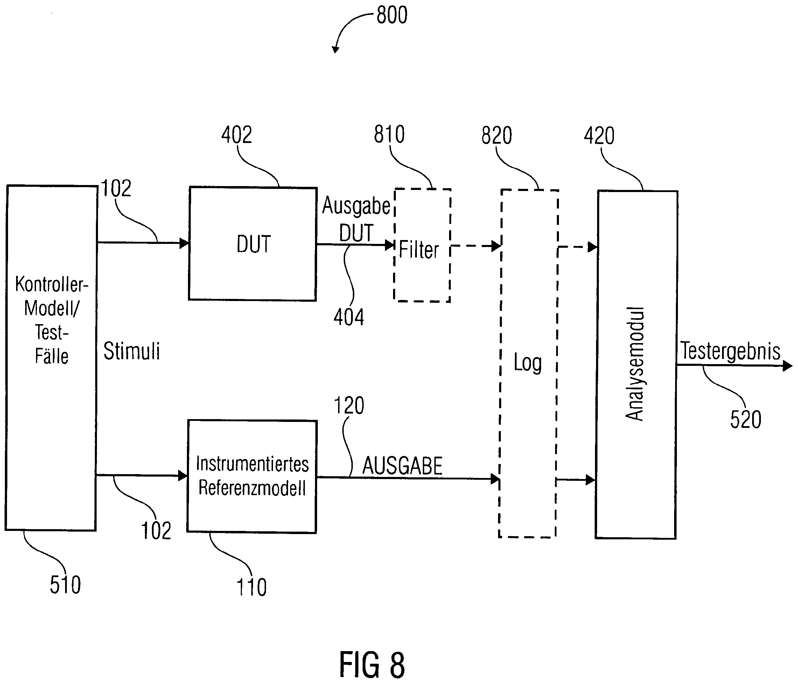

Fig. 8 zeigt eine schematische Darstellung einer Vorrichtung 800 zum Testen eines Testobjekts 402 mit einer Vorrichtung zum Erzeugen eines markierten Referenzdatenstroms 120 entsprechend einem Ausführungsbeispiel gemäß der Erfindung. Die Vorrichtung 800 entspricht dabei im Prinzip der in Fig. 5 gezeigten Vorrichtung. Jedoch sind optional ein Filter 810 und eine Speichereinrichtung 820 (Log) dargestellt.

Wiederum wird von einem Kontroller 510 oder durch Tests (Testfälle) das DUT 402 und das instrumentierte Referenzmodell 110 durch Eingabedaten 102 stimuliert. Ein Filter 810 kann daraufhin spezifizierte Ausgabedaten aus der Ausgabe 404 des DUT 402 extrahieren. Diese eventuell gefilterte DUT-Ausgabe 404 und die Ausgabe 120 des instrumentierten Referenzmodells 110 können nun in einer Speichereinrichtung 820 (Log) vorgehalten werden und dann bei einer Offline-Analyse (zu einem späteren Zeitpunkt) als Eingabe des Analysemoduls 420 verwendet werden. Bei einer Online-Analyse (während des Betriebs) werden die beiden Ausgangsdatenströme direkt an das Analysemodul 420 übergeben. Dieses kann dann eine Zuordnung der Ausgabedaten des DUT 402 und des instrumentierten Referenzmodells 110 vornehmen.

Es ist beispielsweise möglich, dass nur ein Teil der Funktionalität des DUT 402 durch das Referenzmodell 110 abgebildet ist. Der vom DUT 402 kommende Datenstrom enthält dann diverse Ausgabedaten, obwohl nur eine Teilmenge der Funktionalität im Referenzmodell 110 implementiert wurde. Der Ausgabedatenstrom 404 ist somit sehr groß, da viele nicht erwartete Ausgabedaten (da die zugehörigen Funktionalität im Referenzmodell nicht implementiert sind) in ihm enthalten sind. Daher kann eine Filterung des vom DUT 402 ausgegebenen Datenstroms 404 nach der im Referenzmodell 110 implementierten Funktionalität sinnvoll sein. Zu validierende Teildatenströme (des Testobjektausgangsdatenstroms) werden explizit angegeben und nur diese an das Analysemodul 420 übergeben. Dabei kann das Filter 810 beispielsweise eine einfache Liste der möglichen Nachrichten bis hin zu einer Liste inklusive aller relevanten Parameter verwenden. Hierdurch ist eine grobe bis zu einer spezifischen Filterung der zu analysierenden Ausgabedaten 404 des DUT 402 möglich.

Einige Ausführungsbeispiele gemäß der Erfindung beziehen sich auf eine Erweiterung zur Markierung von sequentiellen und/oder parallelen Nachrichten innerhalb von Effekten. Bei Effekten kann es sich beispielsweise um einen Übergang (Transition) eines Zustandsautomaten von einem Zustand zu einem anderen Zustand oder einen Eintritt, in z. B. einen Anfangszustand eines Zustandsautomaten, handeln.

In der Implementierung von Referenzmodellen kann es vorkommen, dass innerhalb eines Effekts mehrere Ausgaben (Teildatenströme) modelliert werden, die jedoch einer impliziten Ordnung unterliegen. Dies kann beispielsweise zur Verringerung der Komplexität des Modells geschehen sein. Die Ausgabedaten werden als unabhängig, ungeordnet angenommen und validiert.

Um eine reihenfolgenabhängige Validierung zu ermöglichen, können sequentielle Bereiche in den Effekten eingefügt werden. Beispielsweise können mit speziellen Sonderzeichen oder Makros innerhalb von Effekten Gültigkeitsbereiche für eine reihenfolgenabhängige Validierung angegeben werden. Innerhalb dieses Bereichs können die Ausgabedaten (Teildatenströme) als sequentiell der Reihenfolge abhängig markiert werden und können als solche vom Analysemodul validiert werden.

In anderen Worten, durch das Hinzufügen einer Markierung bei Teildatenströmen, die bei einem Übergang oder bei einem Eintritt von oder in einen Zustand erzeugt werden, können auch diese Teildatenströme auf das Einhalten ihrer zeitlichen Reihenfolge, falls vorgeschrieben, vom Analysemodul überprüft werden.

Bei einigen Ausführungsbeispiele gemäß der Erfindung wird ein Distanzmaß und/oder eine Maske zur Erkennung von Ähnlichkeiten und Abgrenzungen von Nachrichten (Teildatenströmen) verwendet. Sind beispielsweise zu einem Zeitpunkt mehrere ähnliche Ausgaben möglich, so muss eine Zuordnung dieser zu einer Referenzausgabe erfolgen, um eine Aussage treffen zu können. Ein kompletter Vergleich der Daten kann z. B. aufgrund von Datenabhängigkeiten, Nicht-Determinismus der Daten oder einer ungenauen Referenzmodellierung nicht aussagekräftig sein.

In solchen Fällen kann beispielsweise eine Ähnlichkeitsmaske zur Kennzeichnung von Diversifikationsmerkmalen der Ausgabedaten verwendet werden. Diese Kennzeichnung kann die in einer Nachricht (Teildatenstrom) unterscheidbaren Datenanteile, wie z. B. einzelne Parameter oder auch einzelne Bits, maskieren. Eine solche Maske kann ähnlich den Filterinformationen als Zusatzinformation angegeben werden. Auch ist eine stochastische Ermittlung dieser anhand von Referenzdaten möglich. Werden ähnliche Ausgabedaten einander zugeordnet, so kann eine Distanzmetrik, wie z. B. ein einfacher Faktor gleicher Parameter oder ein Hamming-Abstand, angewendet werden. Ist eine Ähnlichkeitsmaske für die Ausgabedaten/Nachricht vorhanden, so können nur die maskierten Datenanteile zur Distanzberechnung herangezogen werden.

Einige Ausführungsbeispiele gemäß der Erfindung umfassen ein Analysemodul zur Online-Analyse. Eine Zuordnung von Ausgabedatenströmen (des Referenzmodells und des Testobjekts) kann beispielsweise durchgeführt werden, wenn beide Datenströme komplett erzeugt und gespeichert wurden (in einer Speichereinrichtung), hier auch "Offline-Analyse" genannt. Eine Analyse der Ausgangsdatenströme zur Laufzeit ("Online-Analyse") ist durch verschiedenes Zeitverhalten (zeitliche Reihenfolge der Teildatenströme) von instrumentiertem Referenzmodell und DUT nicht ohne Weiteres möglich.

Da die Nachrichten im Ausgangsdatenstrom zu unterschiedlichen Zeitpunkten eintreffen können, können beispielsweise verschiedenen Datenhaltungslisten verwendet werden, um die zeitliche Diskrepanz auszugleichen. Dabei richtet sich das maximal vorzuhaltende Zeitfenster nach dem spezifizierten Zeitverhalten (des Referenzmodells und des Testobjekts) plus einer variablen Zeit, die den Rahmen für abweichendes Verhalten festlegt. Die Art der Implementierung einer Liste als z. B. verkettete Liste, Heap (spezielle Datenstruktur) oder balancierter Baum ist hier nicht eingeschränkt. Die Beschaffenheit der Speichereinrichtung und der verwendeten Datenstruktur ist an dieser Stelle nicht entscheidend. Durch diese Datenvorhaltung kann innerhalb eines Zeitfensters unterschiedliches Zeitverhalten sowohl des instrumentierten Referenzmodells als auch das des DUT kompensiert werden.

Beispielsweise können in einer ersten Liste die zu validierenden Nachrichten (die Teilreferenzdatenströme) gespeichert werden. Diese Liste wird im Folgenden auch "V-Liste" genannt. In dieser Liste wird die Ausgabe (der Referenzdatenstrom) des instrumentierten Referenzmodells mit Markierung vorgehalten. Hierbei gibt die Markierung z. B. den gültigen Zustandsraum oder Unterzustandsraum der jeweiligen Nachricht (des jeweiligen Teilreferenzdatenstroms) an. Jede Nachricht kann mit einem Zeitstempel versehen werden, der auch eine Analyse des zeitlichen Verhaltens erlaubt.

Des Weiteren können die vom DUT eingetroffenen Nachrichten in einer weiteren Liste, die im Folgenden auch "E-Liste" genannt wird, gespeichert werden. Diese Liste kann Ausgaben (den Testobjektausgangsdatenstrom) vom DUT vorhalten, die z. B. nicht gefiltert werden und nicht zuvor vom instrumentierten Referenzmodell ausgegeben wurden. Solche Nachrichten werden hier auch als "spontane Nachricht" benannt. Der Zeitpunkt des Eintreffens jeder Nachricht kann festgehalten werden, um das Zeitverhalten des DUT zu analysieren. Die Länge der Liste kann beispielsweise durch ein definiertes Zeitfenster reduziert werden, so dass z. B. nur spontane Nachrichten der letzten x Sekunden (eine vordefinierte Anzahl von Sekunden) vorgehalten werden.

Zusätzlich kann beispielsweise eine Liste mit zeitlich ungültigen Nachrichten, im Weiteren auch "X-Liste" genannt, erzeugt werden. Nachrichten, die vom instrumentierten Referenzmodell ausgegeben werden und innerhalb des spezifizierten Zeitverhaltens nicht eintreffen, können in dieser Datenerhaltungsliste gespeichert werden. Diese Nachrichten können aus der Liste zu validierender Nachrichten entfernt werden, wenn das Zeitverhalten abweicht, und der Liste zeitlich ungültiger Nachrichten hinzugefügt werden. Die X-Liste kann z. B. auch nur ein gewisses Zeitfenster umfassen, das zur Laufzeit verschoben wird. Es werden beispielsweise nur alle Ausgabedaten innerhalb der letzten x Sekunden gespeichert.

Es ist auch beispielsweise möglich, dass die Ausgabe des DUT (der Testobjektausgangsdatenstrom) unvollständig ist. Wird eine solche Lücke in der Ausgabe des DUT erkannt können die dieser Lücke entsprechenden Ausgaben des Referenzmodells ebenfalls aus der Liste zu validierender Nachrichten entfernt werden oder als ungültig markiert werden.

Bei einem Beispielablauf für eine Online-Validierung mit einer Vorrichtung zum Testen eines Testobjekts wird zuerst von einem Kontroller-Modell (Test-Fälle) Stimuli (ein Eingangsdatenstrom) generiert. Darauf basierend kann das instrumentierte Referenzmodell markierte Ausgaben (einen Referenzdatenstrom), die an ein Analysemodul "übergeben" werden, erzeugen. Genauso generiert das DUT basierend auf dem Eingangsdatenstrom Ausgabedaten (einen Testobjektausgangsdatenstrom). Ein optionales Filter leitet definierte Nachrichten an das Analysemodul weiter. Aufgrund des optionalen Filters und der externen Schnittstelle zum Analysemodul (Analysemodell) treffen die Ausgabedaten am Analysemodul meist nach denen des instrumentierten Referenzmodells ein. Dies ist jedoch keine Voraussetzung und somit keine Einschränkung.

Vom instrumentierten Referenzmodell kommende markierte Ausgaben werden beispielsweise in der V-Liste mit Zeitstempel eingetragen.

Die vom DUT generierte Ausgabe wird mit den in der V-Liste vorgehaltenen Ausgabedaten verglichen. Wurde eine ähnliche Ausgabe auch vom instrumentierten Referenzmodell generiert und in der V-Liste gespeichert, so kann diese hinsichtlich der zeitlichen Reihenfolge, des zeitlichen Verhaltens und der Vollständigkeit gegenüber der Referenzausgabe analysiert werden. Ist eine ähnliche Ausgabe nicht in der V-Liste, so kann sie als "spontane Nachricht" in die E-Liste eingetragen werden. Alternativ kann in der X-Liste ungültiger Nachrichten nach einer ähnlichen Nachricht gesucht werden. Somit können beispielsweise eintreffende, aber nicht zeitlich korrekte Ausgabedaten zugeordnet werden. Falls Ausgabedaten vom instrumentierten Referenzmodell nach den entsprechenden Ausgaben des DUT eintreffen, kann hierdurch auch eine Analyse solcher Ausgabedaten bei der Online-Analyse erfolgen. Darüber hinaus ist es durch eine zusätzliche Information möglich, zu erkennen, ob die Ausgabedaten durch reines Zeitverhalten oder eine Zustandsänderung im Modell nicht verhaltenskonform sind.

Treffen Ausgabedaten vom instrumentierten Referenzmodell oft oder immer nach den entsprechenden Ausgaben des DUT ein, kann die Ausgabe des DUT (der Testobjektausgangsdatenstrom) beispielsweise verzögert werden.

Ist das Zeitverhalten einer vom instrumentierten Referenzmodell generierten Ausgabe nicht mehr gegeben (z. B. durch ein Timeout/Zeitüberschreitung), so wird die Ausgabe aus der V-Liste in die X-Liste zeitlich ungültiger Ausgaben verschoben.

Verlässt das instrumentierte Referenzmodell einen Zustandsraum oder Unterzustandsraum, so kann der nicht mehr aktuelle und neue Zustandsraum dem Analysemodul mitgeteilt werden. Das Analysemodul kann dann die V-Liste nach Nachrichten mit Markierung des verlassenen Zustandsraums durchsuchen und diese in die X-Liste verschieben. Dabei können die Nachrichten zusätzlich als "ungültig markiert" werden.

Weitere Ausführungsbeispiele gemäß der Erfindung beziehen sich auf eine Vorrichtung zum Testen eines Testobjekts mit einer Erweiterung zur Behandlung von DUT-Ereignissen durch Auswertung von Historienfenster. Bei Ereignissen, die an einer anderen als an der durch den Ausgangsdatenstrom beobachteten Schnittstelle am DUT auftreten (folgend auch als "DUT-Ereignis" bezeichnet), wie z. B. Drücken eines Knopfes am DUT, kann nur deren Auswirkung auf die Ausgabedaten beobachtet werden. Hierdurch zeigt das DUT ein Ausgabeverhalten, welches das instrumentierte Referenzmodell erst nach Erkennen eines oben genannten Ereignisses aufweisen kann. Wird ein solches DUT-Ereignis erkannt, ist eine Reaktion (des DUT) hierauf meistens schon geschehen und eine Online-Analyse erfolgt zu spät. Ein DUT-Ereignis kann beispielsweise durch die Reaktion auf ein solches (in dem Testobjektausgangsdatenstrom) erkannt und am instrumentierten Referenzmodell als Eingabe repliziert werden.

In einem solchen Fall kann beispielsweise eine explizite Markierung der durch DUT-Ereignisse ausgelösten Ausgabedaten (des Referenzmodells) und Zuordnung zu bereits erfolgten DUT-Ausgaben erfolgen. Solche markierte Ausgabedaten können z. B. vom Analysemodul in der Historie bereits eingetroffenen Ausgabedaten vom DUT zugeordnet werden. Hierzu wird beispielsweise die zuvor beschriebene E-Liste vom DUT eingetroffener Nachrichten nach ähnlichen Ausgabedaten überprüft. Dadurch können Ausgabedaten auch nach dem Zustandswechsel im instrumentierten Referenzmodell analysiert werden. Dies kann auch durchgeführt werden, wenn nicht garantiert ist, dass Ausgabedaten vom instrumentierten Referenzmodell vor denen des DUT eintreffen. In anderen Worten, ein Teilreferenzdatenstrom kann vor Speicherung in der V-Liste mit den gespeicherten Teiltestobjektausgangsdatenströmen in der E-Liste verglichen werden, um den entsprechenden Teiltestobjektausgangsdatenstrom auch zu finden, wenn der Teiltestobjektausgangsdatenstrom vor dem Teilreferenzdatenstrom beim Analysemodul ankommt.

Einige Ausführungsbeispiele gemäß der Erfindung beziehen sich auf eine Vorrichtung zum Testen eines Testobjekts, die im Bereich Infotainment (Integration von Informationstechnik mit Unterhaltungselektronik) verwendet wird. Hierbei können beispielsweise Referenzmodelle von Steuergeräten des Infotainments im Fahrzeug wie beschrieben angepasst werden. Als Kommunikationsinfrastruktur kann hier z. B. ein Multimedia Oriented System Transportation (MOST, multimediaorientierte System-Transport) Bus eingesetzt werden. Mit Hilfe der beschriebenen Methodik kann ein Vergleich von Referenzmodellen oder eines Referenzmodells mit einer Steuergeräteimplementierung durchgeführt werden. Durch die Lösung des Zuordnungsproblems kann beispielsweise eine Aussage über die Schnittstellenkonformität des zu testenden Geräts oder Modells getroffen werden.

Dabei sind die Grundprinzipien der Implementierung in der Domäne Infotainment und/oder MOST, dass zum Beispiel der Aufwand und Änderungen im FBlock-Modell (Funktionsblock-Modell, wie das Referenzmodell auch genannt wird) gering gehalten werden, die Validierung aufgrund implizit und explizit festgelegter Sequenzen von MOST-Nachrichten im Modell geschieht und Sequenzen nur innerhalb der möglichen Modellpfade begrenzt sind.

Beispielsweise kann aus den erstellten (bereits vorhandenen) Referenzmodellen mittels einer Codegenerierung C++ Quelltext erzeugt werden. Fehlen zur Laufzeit oder im generierten Quelltext Modellinformationen, kann jedes Modell zusätzlich mit einer Markierung zur Entwurfszeit angereichert werden.

Hierunter fallen unter anderem Markierungen von Zustandsübergängen, explizite Markierungen von Sequenzen (Nachrichten in vorgeschriebener Reihenfolge) innerhalb eines Effektes (z. B. Übergang/Transition/Zustand). Da nur die auf DUT-Ereignisse folgende Ausgabe auf dem MOST-Ring (ringförmiger MOST-Bus) sichtbar sind, werden diese Ereignisse gesondert behandelt. Dabei ist das zeitliche Verhalten von Bedeutung. Deshalb ist beispielsweise eine explizite Markierung von Transitionen, die durch DUT-Ereignisse getriggert werden, sinnvoll.

Beispielsweise muss auch das beim MOST eingesetzte Publish/Subscribe-Verfahren (Veröffentlichen/Unterzeichen-Verfahren) durch so genannte Notifizierungen gesondert beachtet werden. Eine Markierung/Ausgabe des instrumentierten Referenzmodells sollte nur im Falle der Registrierung für einen Wert ("Notification Set", Benachrichtigungssatz) erfolgen. Mit einem Wert ist dabei beispielsweise ein bestimmter Parameter eines Geräts, wie z. B. das aktuelle Lied eines Radios, gemeint. Wird ein externes Modul zur Verwaltung der Notifizierungen verwendet, sollte eine Ausgabe um Markierungen erweitert werden. Es kann jedoch sein, dass beispielsweise eine proprietäre Implementierung des Notifizierungsdienstes keine Markierung zulässt. Dann kann z. B. ohne Einschränkung von einer Notifizierung für die veränderten Attribute des Referenzmodells ausgegangen werden.

In anderen Worten, der Notifizierungsdienst speichert die Geräte, die sich für einen bestimmten Wert interessieren, und gibt Änderungen dieses Werts an die gespeicherten Geräte weiter. Es wird jedoch nicht bekanntgegeben, welche Geräte sich für einen bestimmten Wert interessieren. Um dieses Problem zu umgehen, können Annahmen für das Referenzmodell gemacht werden.

Ein Beispiel für die Anpassung oder Instrumentierung eines Referenzmodells mit hierarchischen Markierungen wäre, dass jeder Zustand mit Effekt und jede Transition (Übergang) zu Beginn mit einem Makro NEW_STATE_INFO (NEUE_ZUSTANDS_INFO) markiert wird. Dieses enthält z. B. als ersten Parameter eine Bezeichnung für den verlassenen Zustand, als zweiten Parameter den für den zu erreichenden Zustand. Die Bezeichnung setzt sich beispielsweise aus den Überzustandsnamen und dem Zustandsnamen durch "," getrennt zusammen, wie z. B. NEW_STATE_INFO ("Arbeiten, P1, NichtVerbunden", "Arbeiten, P1, Verbunden").

Die Transition verbindet den Zustand "NichtVerbunden" mit "Verbunden". Beide Zustände sind Unterzustände von "Arbeiten" und von dem ersten parallelen Unterzustand von Arbeiten, hier mit "P1" bezeichnet. Intern können die Zustandsnamen in Großbuchstaben gehalten werden, um Fehler durch unterschiedliche Schreibweisen zu verringern.

Eine Markierung (im Weiteren auch als Tag bezeichnet) kann beispielsweise aus einem C++ Vektor bestehen. Die Größe des Vektors kann den Grad der Parallelität des Effekts (des Zustands oder der Transition) angeben. Beispielsweise verlängern parallele Transaktionen den Vektor um zwei Einträge (1. ID oder Identifikation des parallelen Zustandsraums, 2. sequentielle Eventnummer oder Ereignisnummer). Als Werte des Vektors können z. B. Zahlen oder Zeichenketten verwendet werden.

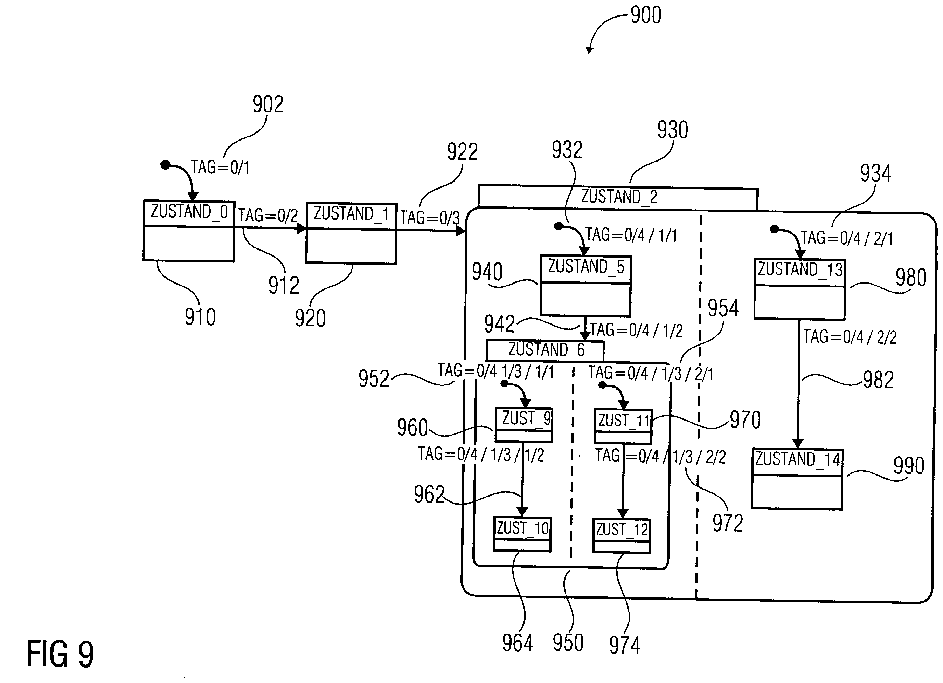

Fig. 9 zeigt dazu eine schematische Darstellung eines Zustandsdiagramms 900 mit einem möglichen Markierungsansatz. Dabei werden Markierungen (Tags) in Form von ganzen Zahlen verwendet.

Zu Beginn steht ein Übergang 902 in den Zustand_0 910, der mit dem Tag 0/1 markiert ist. Danach erfolgt ein Übergang 912 in den Zustand_1 920 mit dem Tag 0/2 und von dort ein Übergang 922 in den Zustand_2 930, der mit dem Tag 0/3 markiert ist.

Der Zustand_2 930 umfasst zwei parallele Verarbeitungszweige in Form von parallelen Zustandsautomaten. Ein Zweig beginnt mit einem Übergang 932 in den Zustand_5 940, der mit dem Tag 0/4 / 1/1 markiert ist, gefolgt von einem Übergang 942 in einen Zustand_6 950, der mit einem Tag 0/4 / 1/2 markiert ist.

Der Zustand_6 950 umfasst wieder zwei parallel arbeitende Zustandsautomaten, wobei beim ersten zuerst ein Übergang 952 in einen Zustand_9 960 erfolgt, der mit dem Tag 0/4 / 1/3 / 1/1 markiert ist, gefolgt von einem Übergang 962 in einen Zustand_10 964, der mit dem Tag 0/4 / 1/3 / 1/2 markiert ist.

Der zweite parallele Zustandsautomat von Zustand_6 950 beginnt mit einem Übergang 954 in Zustand_11 970, der mit dem Tag 0/4 / 1/3 / 2/1 markiert ist, gefolgt von einem Übergang 972 in einen Zustand_12 974, der mit dem Tag 0/4 / 1/3 / 2/2 markiert ist.

Der zweite parallele Zustandsautomat von Zustand_2 930 weist zuerst einen Übergang 934 in einen Zustand_13 980 auf, der mit einem Tag 0/4 / 2/1 markiert ist, gefolgt von einem Übergang 982 in einen Zustand_14 990, der mit dem Tag 0/4 / 2/2 markiert ist.

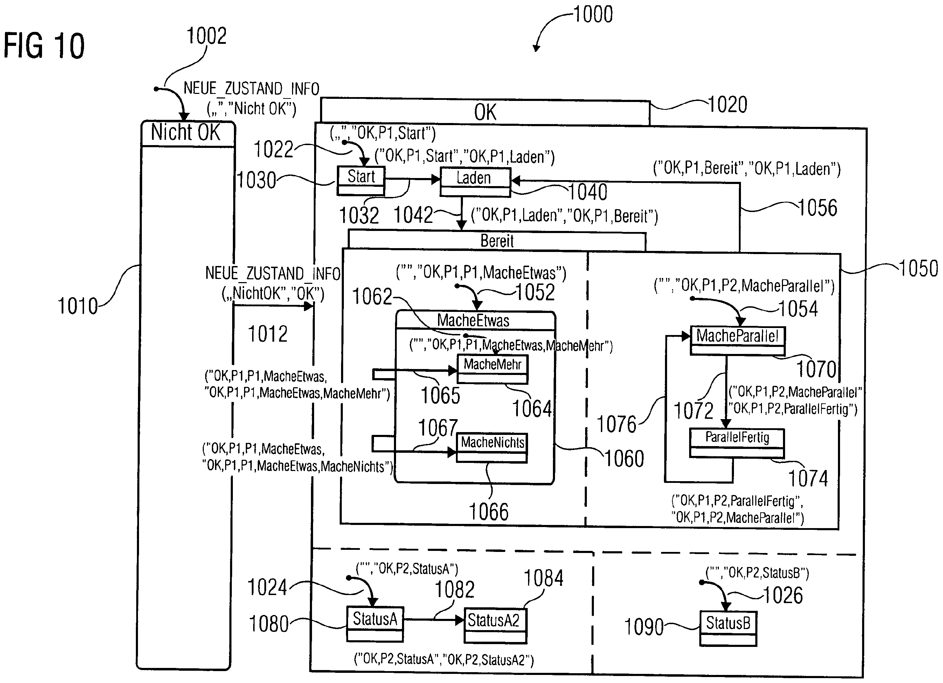

Als weiteres Beispiel ist in Fig. 10 eine weitere schematische Darstellung eines Zustandsdiagramms 1000 mit einem möglichen Markierungsansatz gezeigt.

Dabei erfolgt zu Beginn ein Übergang 1002 in einen Zustand NichtOK 1010 mit einer Markierung NEUE_ZUSTAND_INFO ("", "NichtOK"). Von dort aus folgt ein Übergang 1012 in den Zustand OK 1020 mit der Markierung NEUE_ZUSTAND_INFO ("NichtOK", "OK").

Der Zustand OK 1020 weist drei parallele Zustandsautomaten auf. Der erste Zustand Start 1030 des ersten Zustandsautomaten wird durch einen Übergang 1022 mit der Markierung ("", "OK, P1, Start") erreicht. Von dort erfolgt ein Übergang 1032 in den Zustand Laden 1040, der mit ("OK, P1, Start", "OK, P1, Laden") markiert ist, gefolgt von einem Übergang 1042 in einen Zustand Bereit 1050, der durch ("OK, P1, Laden", "OK, P1, Bereit") markiert ist.

Der Zustand Bereit 1050 enthält wiederum zwei parallele Zustandsautomaten. Dabei erfolgt beim ersten ein Übergang 1052 in den Zustand MacheEtwas 1060, der mit ("", "OK, P1, P1, MacheEtwas") markiert ist.

Der Zustand MacheEtwas 1060 hat wiederum zwei parallele Zustandsautomaten, wobei der erste Zustand MacheMehr 1064 des ersten Zustandsautomaten durch einen Übergang 1062, der mit ("", "OK, P1, P1, MacheEtwas, MacheMehr") markiert ist, oder durch einen Übergang 1065, der mit ("OK, P1, P1, MacheEtwas", "OK, P1, P1, MacheEtwas, MacheMehr") markiert ist, erreicht werden und der erste Zustand MacheNichts 1066 des zweiten Zustandsautomaten durch einen Übergang 1067, der mit ("OK, P1, P1, MacheEtwas", "OK, P1, P1, MacheEtwas, MacheNichts") markiert ist, erreicht werden kann.

Der erste Zustand MacheParallel 1070 des zweiten parallelen Zustandsautomaten des Zustands Bereit 1050 kann durch einen Übergang 1054, der mit ("", "OK, P1, P2, MacheParallel") markiert ist, erreicht werden. Von dem Zustand MacheParallel 1070 führt ein Übergang 1072, der mit ("OK, P1, P2, MacheParallel", "OK, P1, P2, ParallelFertig") markiert ist, zu einem Zustand ParallelFertig 1074. Von dem Zustand ParallelFertig 1074 gelangt man über einen Übergang 1076, der mit ("OK, P1, P2, ParallelFertig", "OK, P1, P2, MacheParallel"), wieder in den Zustand MacheParallel 1070. Ein weiterer Übergang 1056, der mit ("OK, P1, Bereit", "OK, P1, Laden") markiert ist, führt vom Zustand Bereit 1050 zurück zum Zustand Laden 1040.

Der zweite parallele Zustandsautomat des Zustands OK 1020 hat einen ersten Zustand StatusA 1080, der durch einen Übergang 1024, der mit ("", "OK, P2, StatusA") markiert ist, erreichbar ist. Vom Zustand StatusA 1080 führt ein Übergang 1082, der mit ("OK, P2, StatusA", "OK, P2, StatusA2") markiert ist, in den Zustand StatusA2 1084.

Der dritte parallele Zustandsautomat des Zustands OK 1020 weist nur einen Zustand StatusB 1090 auf, der durch einen Übergang 1026, der mit ("", "OK, P3, StatusB") markiert ist, erreichbar ist.

Die in Fig. 9 und Fig. 10 gezeigten Beispiele zeigen somit, wie eine Markierung von Zustandsübergängen von teilweise parallelen Zustandsautomaten aussehen könnte.

Durch DUT-Ereignisse getriggerte (ausgelöste) Übergänge können beispielsweise mit einem Befehl DUT_EVENT_TRIGGER (DUT_EREIGNIS_AUSLÖSER) direkt nach NEW_STATE_INFO gekennzeichnet werden. Die spezielle Behandlung von DUT-Ereignissen kann dann im instrumentierten Referenzmodell erfolgen.

Zu validierende Events/Properties (Ereignisse/Eigenschaften) können mit VAL_SENDMOSTEVENT (VAL_SENDEMOSTEREIGNIS) bzw. VAL_SEND_PROPERTY (VAL_SENDE_EIGENSCHAFT) erzeugt werden.

Für Sequenzen in Effekten kann es explizite Markierungen geben. Spezifizierte Sequenzen innerhalb einer Transition (Übergang) oder eines Zustands können beispielsweise in MOSTSEQUENCE_BEGIN() (MOSTSEQUENZ_ANFANG) UND MOSTSEQUENCE_END() (MOSTSEQUENZ_ENDE) eingeschlossen werden, wie z. B. folgend gezeigt:

```
 MOSTSEQUENCE_BEGIN();
     CREATE_EVT(MOST_EVENT1);
     // (ERZEUGE_EVT(MOST_EREIGNIS1)) erzeugt eine MOST-
     Nachricht
     VAL_SEND_MOST_EVT(Address);
     // (VAL_SENDE_MOST_EVT(Adresse)) versendet MOST-
     Nachricht an Empfänger "Adresse"
     CREATE_EVT(MOST_EVENT2);
     // (ERZEUGE_EVT(MOST_EREIGNIS2)) erzeugt eine MOST-
     Nachricht
     VAL_SEND_MOST_EVT(Address);
     // (VAL_SENDE_MOST_EVT(Adresse)) versendet MOST-
     Nachricht an Empfänger "Adresse"
     MOSTSEQUENCE_END();
```

Sequentielle Nachrichten können beispielsweise einen laufenden Index erhöhen, z. B. den letzten Wert einer Markierung. Ein MOST-Ereignis ist dann zu einem bestimmten Zeitpunkt gültig, wenn das vom Modell generierte Ereignis den kleinsten laufenden Index in seinem Zustandsraum besitzt. Der Zustandsraum ist hier beispielsweise durch die hierarchische Markierung in Form eines Vektors definiert. Ein Beispiel für eine solche Markierung für einen Zustand "Start" mit sequentiellen Nachrichten wäre:
("Start",1) - für die erste zu versendende Nachricht
("Start",2) - für die zweite zu versendende Nachricht
("Start",3) - für die dritte zu versendende Nachricht ... usw.

Die Markierungen können beispielsweise in der Implementierung durch ein Makro automatisiert erstellt und aktualisiert werden. Dabei können die hierarchischen Markierungen und die Markierungen der DUT-Ereignisse durchgeführt werden. Dadurch kann der Instrumentierungsaufwand (auch nach Modelländerungen) sehr gering gehalten werden.

Das Analysemodul eines konkreten FBlocks (Funktionsblocks) ist beispielsweise von der abstrakten Klasse AnalyseModel (Analysemodell) abgeleitet, einer Implementierung einer generischen Klasse für ein Analysemodul. Ein ESK-Modell, eine allgemeine Klasse für eine Applikation, kann eine Assoziation itsAnalyseModel (EsIstAnalysemodell) zu dieser AnalyseModel-Klasse besitzen.

Beispielsweise kann es ausreichen, nur die Liste zu validierender FktIds (Funktionsidentifikationen) und OpTypes (Operationstypen) neben der FBlockId (Funktionsblockidentifikation) als Änderung anzugeben. FBlockIds kennzeichnen einen Funktionsblock eindeutig, durch eine FktId wird eine Funktion eines Funktionsblocks und durch einen OpType eine Operation eines Funktionsblocks eindeutig gekennzeichnet. Dies wird beispielsweise im Konstruktor der Klasse oder der initialen Defaulttransition (vorgegebener Übergang), der Initialisierung eines Zustandsdiagramms, gefüllt.

Die Funktionsweise ist dann beispielsweise, dass bei einem neuen Zustandsübergang das instrumentierte Referenzmodell über die Assoziation itsAnalyseModel eine Methode des Analysemoduls innerhalb des Makros NEW_STATE_INFO aufruft (hier z. B. updateStateInfo(), AktualisiereZustandsInfo(), genannt). Diese setzt beispielsweise alle Events (Ereignisse), die durch das Verlassen des Zustands hätten bereits eintreffen sollen, als ungültig. Das instrumentierte Referenzmodell schickt mittels einer Methode, hier als validate (validiere) bezeichnet, die zu erwartenden Events (Ereignisse) mit entsprechenden Parametern an das Analysemodul. Dadurch wird z. B. auf das übergebene Event vom DUT gewartet. Intern kann im instrumentierten Referenzmodell eine Liste mit den Eventnamen (Ereignisnamen) als Index aufgebaut werden, in der alle erwarteten Events vorkommen.

Alle an der MOST-Schnittstelle eintreffenden Events können mit oben genannten FBlockIds, FktIds und OpTypes verglichen werden. Sollen diese validiert werden, so wird beispielsweise eine Methode mit Namen validateEvent() (validiereEreignis()) aufgerufen. Diese kann die Validität des eintreffenden Events durch die vorgehaltene Liste überprüfen. Ist das Event in der Liste noch als gültig angegeben, kann zusätzlich die Reihenfolge überprüft werden, falls beispielsweise eine explizite Sequenz MOSTSEQUENCE (MOSTSEQUENZ) gegeben ist. Aufeinanderfolgende gleiche Events können durch ein Ähnlichkeitsmaß voneinander unterschieden werden. Dieses Maß ist beispielsweise die Summe der unterschiedlichen relevanten Parameter. Parameter können durch eine Maske als relevant markiert werden. Sind keine Parameter markiert, so kann z. B. das erste Event in der Liste validiert werden. Ist das Event nicht in der Liste aufgeführt, kann es als spontanes Event gewertet werden. Spontane Events können ein gewisses Zeitfenster lang gespeichert werden. Tritt ein DUT-Ereignis auf (welches beispielsweise von einem DUT-Ereignis-Generator erzeugt worden ist), so kann dieses Zeitfenster nach eingetroffenen und zu validierenden Events durchsucht werden. Dies geschieht, da durch DUT-Ereignisse ausgelöste Events meist erst mit der entsprechenden Reaktion auf dem MOST-Ring erzeugt werden können.

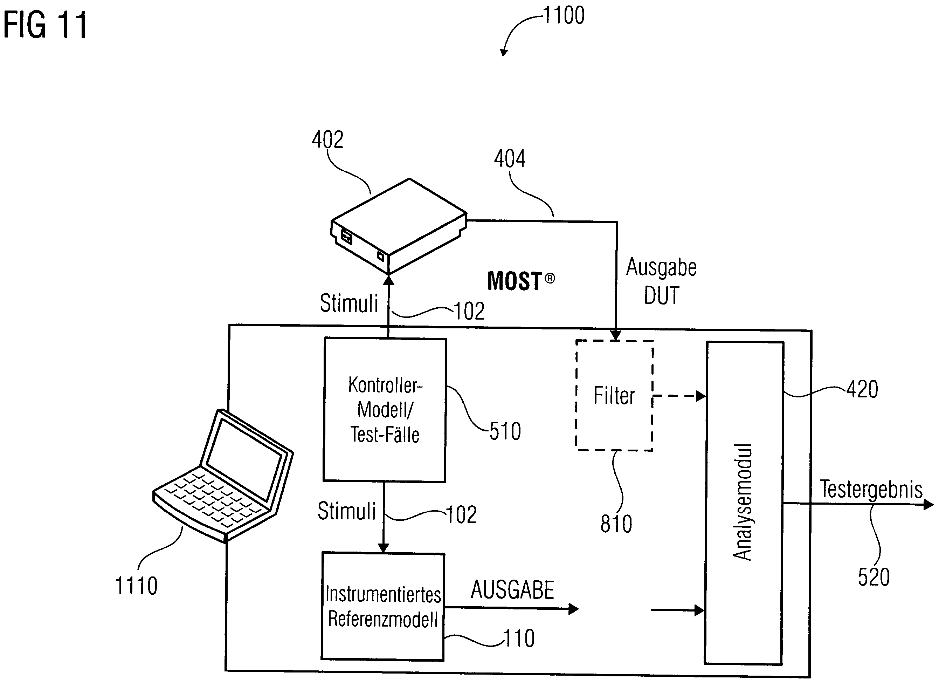

Fig. 11 zeigt dazu einen schematischen Systemaufbau 1100 einer Implementierung einer Vorrichtung zum Testen eines Testobjekts 402 in einem MOST-System. Die Vorrichtung 1100 entspricht dabei im Prinzip der beispielsweise in Fig. 8 gezeigten Vorrichtung. Jedoch wird der Testobjektausgangsdatenstrom 404 vom DUT 402 über einen MOST-Bus ausgegeben und von dort über einen optionalen Filter 810 dem Analysemodul 420 zur Verfügung gestellt. Das Kontroller-Modell 510, das instrumentierte Referenzmodell 110 (Referenzdatenerzeuger), das Analysemodul 410 und der optionale Filter 810 können dabei beispielsweise als Computerprogramm bereitgestellt werden und auf einem Computer 1110 ausgeführt werden.

Bei einem Ablauf einer Online-Validierung werden beispielsweise vom instrumentierten Referenzmodell 110 durch Stimuli 102 angestoßene Sequenzen (aufeinanderfolgende Teilreferenzdatenströme) generiert, die mit einer Markierung versehen sind. Diese Markierung definiert z. B. exakt den Zustandsraum, in dem dieser Event (Ereignis) "gültig" ist. Innerhalb einer expliziten Sequenz in diesem Zustandsraum kann die Markierung auch eine Nummerierung enthalten. Diese vom instrumentierten Referenzmodell 110 generierten Sequenzen können mit den vom DUT 402 erzeugten Events verglichen werden. Zustandsübergänge können erwartete Events "ungültig" werden lassen, da solche vor diesem Übergang/Trigger (Auslöser) vom DUT 402 hätten generiert werden sollen. Solche Events verletzen beispielsweise das im Modell spezifizierte Sequenzverhalten von Stimulus und darauffolgender Reaktion.

Vom DUT 402 eintreffende Events können in der vom instrumentierten Referenzmodell 110 generierten Sequenzliste gesucht werden. Sind diese vorhanden, gültig und treten innerhalb der korrekten Reihenfolge im Zustandsraum auf, so wurde das Event korrekt vom DUT 402 generiert. Nicht in dieser Liste auftretende Events werden als "spontane Events" bezeichnet und können durch eine Erweiterung in die Validierung mit einbezogen werden. Treten in der Sequenzliste gespeicherte Events z. B. innerhalb einer Zeitspanne nicht auf, gelten diese als fehlend (Timeout, Zeitüberschreitung).

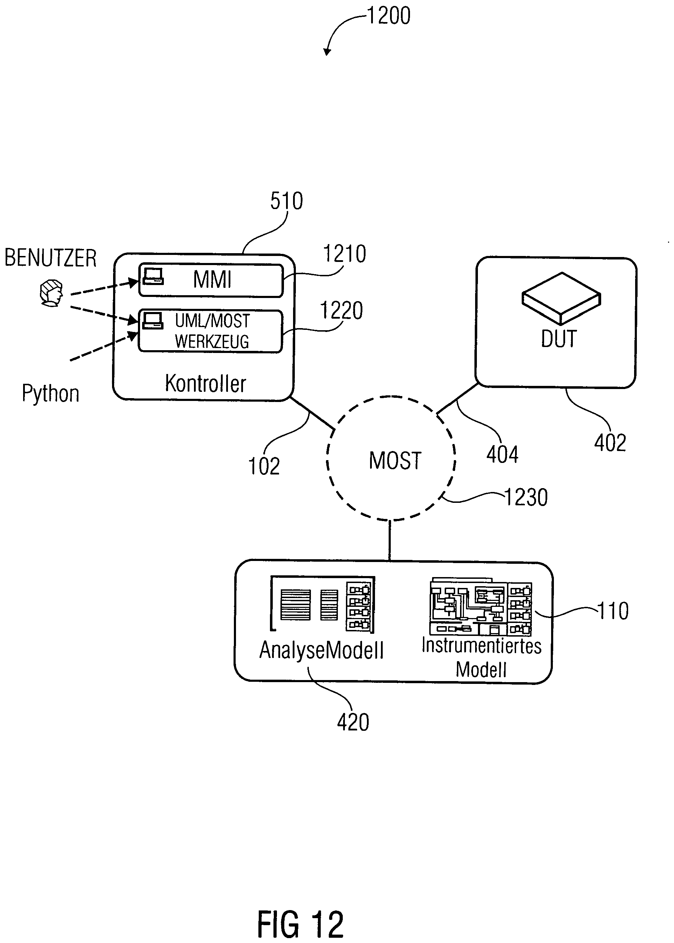

Fig. 12 zeigt einen schematischen physikalischen Aufbau einer Vorrichtung 1200 zum Testen eines Testobjekts 402 (DUT) in einem MOST-System. Die Vorrichtung 1200 entspricht dabei im Prinzip der in Fig. 11 beschriebenen Vorrichtung. Jedoch ist der MOST-Bus ringförmig ausgeführt und die einzelnen Geräte oder Module sind an den MOST-Bus 1230 angeschlossen. Der Aufbau der Vorrichtung 1200 kann beispielsweise zur Validierung von MOST-Sequenzen verwendet werden. Ein Controller 510 (synonym Shadow/Schatten oder Stimulusgenerator) sendet z. B. MOST-Events (gemäß spezifizierter Sequenzen) an die angeschlossenen Geräte bzw. den zu testenden FBlock (Funktionsblock). Dieser kann beispielsweise durch ein MMI 1210 (Mensch-Maschine-Schnittstelle) oder durch ein Modell 1220 (UML/MOST-Werkzeug, wie beispielsweise Phyton) repräsentiert werden. Das zu testende Gerät (DUT) ist an den MOST-Ring angeschlossen. Des Weiteren ist ein instrumentiertes Referenzmodell 110 (Instrumented Model) mit einem Analysemodul 420 angeschlossen.

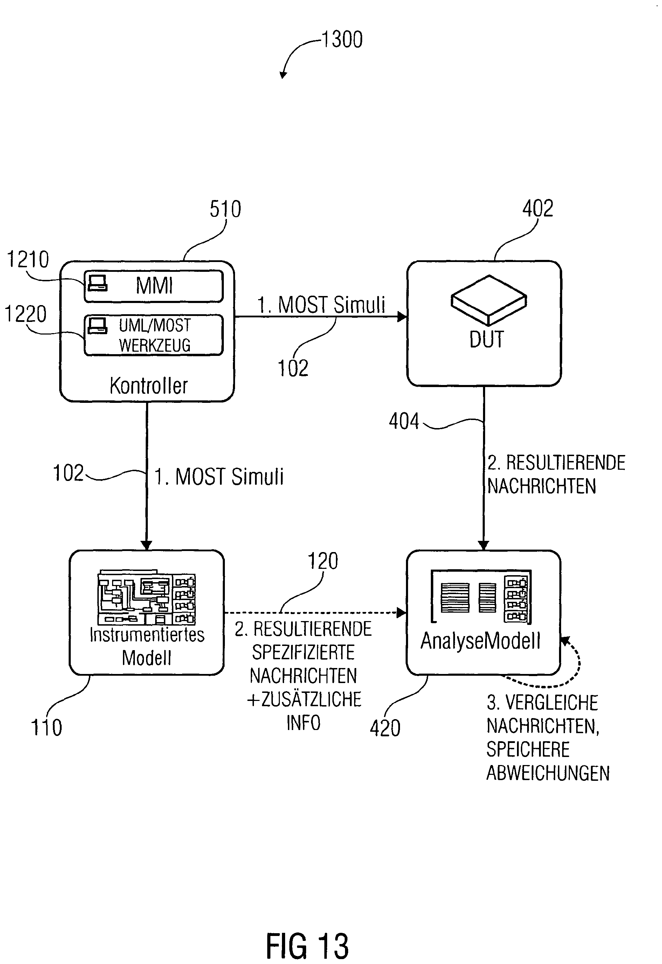

Fig. 13 zeigt eine schematische Darstellung eines Ablaufs 1300 einer Validierung eines Testobjekts 402 durch eine Vorrichtung zum Testen eines Testobjekts 402. Die Vorrichtung entspricht dabei im Prinzip der in Fig. 12 gezeigten Vorrichtung.

Durch Stimuli getriggerte (ausgelöst) MOST-Events werden vom Analysemodul 420 aufgegriffen. Dieses vergleicht die vom instrumentierten Referenzmodell 110 generierte spezifikationstreue Sequenz 120 (Referenzdatenstrom) mit Hilfe der zusätzlichen Information (den Markierungen) des instrumentierten Referenzmodells 110 mit der vom DUT 402 stammenden Sequenz 404 (Testobjektausgangsdatenstrom) und kann eventuelle Abweichungen speichern.

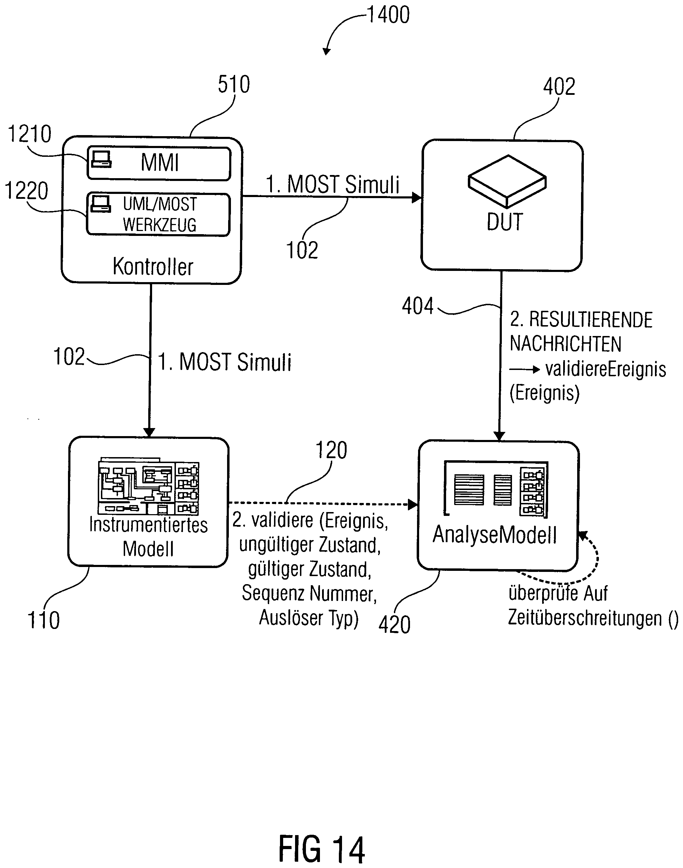

Fig. 14 zeigt eine schematische Darstellung eines getriggerten (ausgelösten) Funktionsaufrufs 1400 des Analysemoduls bei einer Vorrichtung zum Testobjekts in einem MOST-System. Die Vorrichtung entspricht dabei im Prinzip der in Fig. 12 gezeigten Vorrichtung.

Es sind beispielsweise die resultierenden Funktionsaufrufe des Analysemoduls 420 gezeigt, wobei ein vom instrumentierten Referenzmodell 110 generiertes Event mit der Methode validate() (validiere()) an das Analysemodul übergeben werden kann. Diese (Methode) übergibt z. B. zusätzliche Informationen über die Gültigkeit und Abhängigkeit von Events (z.B. ungültiger Zustand, gültiger Zustand, Sequenznummer, Auslösertyp). Zu validierende eingehende Events vom DUT 402 werden beispielsweise durch die Methode validateEvent() (validiereEreignis()) überprüft (z.B. auf Zeitüberschreitung).

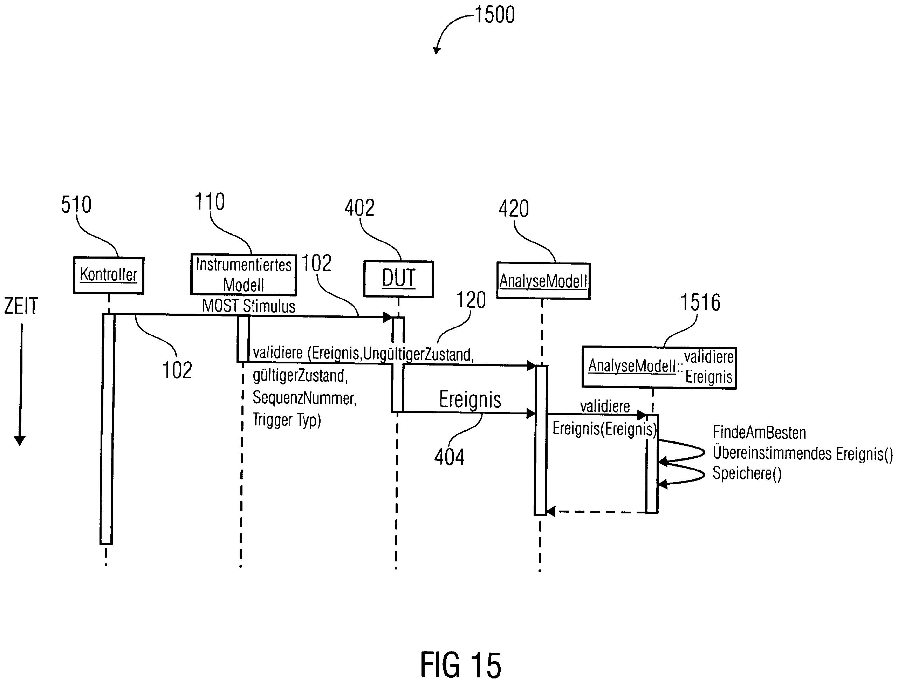

Dazu passend zeigt Fig. 15 eine schematische Darstellung eines Sequenzablaufs 1500 der Validierung bei einem erwarteten Ereignis bei einer Vorrichtung zum Testen eines Testobjekts. Dabei sind in horizontaler Richtung die verschiedenen Elemente (Kontroller 510, instrumentiertes Modell 110, DUT 402, Analysemodul 420) und zusätzlich zum Analysemodul 420 der Zustand validiereEreignis 1510 des Analysemoduls dargestellt. In vertikaler Richtung ist ein zeitlicher Verlauf von Aktionen der unterschiedlichen Elemente der Vorrichtung gezeigt.

Dabei wird zu Anfang ein MOST-Stimulus 102 (Eingangsdatenstrom) an das instrumentierte Referenzmodell 110 und das DUT 402 gesendet. In weiterer Folge schickt das instrumentierte Referenzmodell 110 eine Nachricht mit dem Aufruf validiere (Ereignis, ungültiger Zustand, gültiger Zustand, Sequenznummer, Triggertyp) mit dem Referenzdatenstrom 120 an das Analysemodul 420. Zu einem späteren Zeitpunkt tritt bei dem DUT 402 ein Ereignis auf, das in dem Testobjektausgangsdatenstrom 404 erkennbar ist. Daraufhin wird im Analysemodul 420 beispielsweise ein Übergang in den Zustand validiereEreignis 1510 hervorgerufen und das am besten übereinstimmende Ereignis gesucht und gespeichert, woraufhin der Zustand validiereEreignis 1510 wieder verlassen wird.

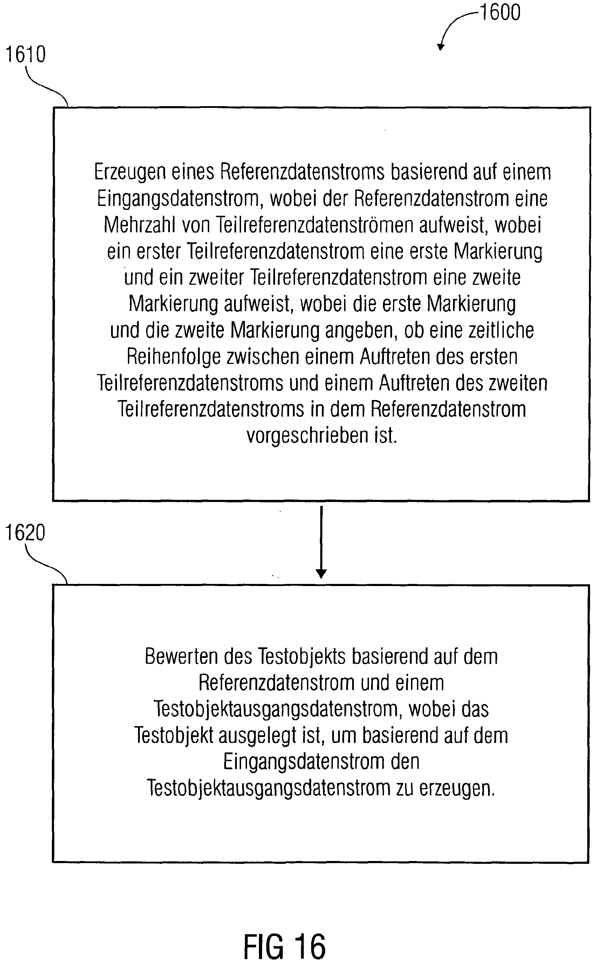

Fig. 16 zeigt ein Flussdiagramm eines Verfahrens 1600 zum Testen eines Testobjekts entsprechend einem Ausführungsbeispiel gemäß der Erfindung. Dabei erfolgt zuerst ein Erzeugen 1610 eines Referenzdatenstroms basierend auf einem Eingangsdatenstrom, wobei der Referenzdatenstrom eine Mehrzahl von Teilreferenzdatenströmen aufweist. Dabei weist ein erster Teilreferenzdatenstrom eine erste Markierung und ein zweiter Teilreferenzdatenstrom eine zweite Markierung auf. Die erste Markierung und die zweite Markierung geben an, ob eine zeitliche Reihenfolge zwischen einem Auftreten des ersten Teilreferenzdatenstroms und einem Auftreten des zweiten Teilreferenzdatenstroms in dem Referenzdatenstrom vorgeschrieben ist.

Danach erfolgt eine Bewertung 1620 des Testobjekts basierend auf dem Referenzdatenstrom und einem Testobjektausgangsdatenstrom, wobei das Testobjekt ausgelegt ist, um basierend auf dem Eingangsdatenstrom den Testobjektausgangsdatenstrom zu erzeugen.

Durch das Verfahren ist man beispielsweise in der Lage zu beurteilen, ob und in welchem Grad die Ausgangsdatenströme von Referenz und DUT (Testobjekt) übereinstimmen. Die Beurteilung oder Bewertung kann trotz unterschiedlichem zeitlichen Verhalten des Referenzdatenstroms und des Testobjektausgangsdatenstroms erfolgen; da durch die Markierungen angegeben wird, ob sich unterschiedliche Teildatenströme überholen dürfen oder ob eine zeitliche Reihenfolge der Teildatenströme vorgeschrieben ist. Eine Analysefunktion kann dann beispielsweise den entsprechenden Test-Verdikt (das entsprechende Test-Urteil) errechnen.

Optional kann der Teilreferenzdatenstrom in einer ersten Speichereinrichtung, wie beispielsweise der bereits erwähnten V-Liste, gespeichert werden. Danach kann ein ankommender Teiltestobjektausgangsdatenstrom mit den gespeicherten Teilreferenzdatenströmen verglichen werden.

Des Weiteren kann optional ein Teiltestobjektausgangsdatenstrom in einer zweiten Speichereinrichtung, wie beispielsweise in der zuvor beschriebenen E-Liste, gespeichert werden, falls bei dem Vergleich des Teiltestobjektausgangsdatenstroms mit den gespeicherten Teilreferenzdatenströmen kein passender Teilreferenzdatenstrom gefunden wird.

Zusätzlich kann optional zu jedem Teilreferenzdatenstrom und zu jedem Teiltestobjektausgangsdatenstrom eine Zeitinformation, wie beispielsweise ein Zeitstempel, hinzugefügt werden.

Des Weiteren können optional Teilreferenzdatenströme, die in der ersten Speichereinrichtung gespeichert sind, in einer dritten Speichereinrichtung, wie beispielsweise in der zuvor beschriebenen X-Liste, gespeichert werden, wenn der Testobjektausgangsdatenstrom innerhalb einer vorgeschriebenen Zeitdauer (Zeitüberschreitung) keinen passenden Teiltestobjektausgangsdatenstrom aufweist.

Einige Ausführungsbeispiele gemäß der Erfindung beziehen sich auf ein Verfahren , bei dem die Wiederverwendung von Funktionsmodellen (Referenzmodellen), die beispielsweise in UML (unified modeling language, vereinheitlichte Modellierungssprache) programmiert sind, zum Testen von Realisierungen (DUTs) durch eine vergleichende Ausführung (Testen gegen das Modell) unter möglichst minimaler Anpassung des Modells (Instrumentierung des Referenzmodells) ermöglicht wird.

Bei einigen Ausführungsbeispielen gemäß der Erfindung kann durch die Verwendung von Makros die Markierung von Zustandsdiagrammen (von Referenzdatenströmen) weitgehend automatisiert werden. Somit ist eine Instrumentierung des Referenzmodells sowohl wartbar als auch mit sehr geringem Aufwand möglich.

Weitere Ausführungsbeispiele gemäß der Erfindung beziehen sich auf eine Vorrichtung zum Testen eines Testobjekts, die einen DUT-Ereignis-Generator bzw. einen Ereignisdetektor umfasst. Wenn das instrumentierte Referenzmodell beispielsweise auf DUT-Ereignisse reagieren soll, müssen diese erkannt und generiert werden. Hierfür kann z. B. ein FBlock-spezifisches Modell als , Eventgenerator erzeugt werden. Dieses kann beispielsweise auf das erste Event nach einem jeweiligen DUT-Ereignis triggern (auslösen) und kann das entsprechende DUT-Ereignis am instrumentierten Referenzmodell erzeugen. Das instrumentierte Referenzmodell kann dieses auch trotz Verzögerung entsprechend auswerten. Sind datenabhängige Übergänge im Modell vorhanden, so sollten die Modelldaten auch durch den DUT-Ereignis-Generator bzw. Ereignisdetektor entsprechend gesetzt werden.

Bei einigen Ausführungsbeispielen gemäß der Erfindung kann für das instrumentierte Referenzmodell ein konkretes Analysemodul von der abstrakten Klasse *AnalyseModel* (*Analysemodell*) abgeleitet werden. In dieser kann die Methode loadEventIds (LadeEreignisIdentifikation), welche alle vom Analysemodul zu validierenden Events setzt, so überschrieben werden, dass die zu validierenden Events (Ereignisse) des FBlocks (Funktionsblocks) initial eingetragen werden.

Bei weiteren Ausführungsbeispielen gemäß der Erfindung kann die beschriebene Vorrichtung und das beschriebene Verfahren zur Instrumentierung und Verwendung von Referenzmodellen bei der modellbasierten Entwicklung eingesetzt werden. Werden zur Spezifikation oder als prototypische Realisierung modellbasierte Verfahren eingesetzt, kann eine Instrumentierung dieser Referenzmodelle erfolgen. Hierdurch können DUTs mit gleichem zu erwartendem Verhalten getestet werden.

Bei einigen Ausführungsbeispielen gemäß der Erfindung kann der Referenzdatenerzeuger einfach durch die Instrumentierung eines bereits bestehenden Referenzmodells erstellt werden. Durch die Anpassung des Referenzmodells kann ein Referenzdatenerzeuger und somit eine Vorrichtung zum Erzeugen eines markierten Referenzdatenstroms mit minimalem Aufwand bereitgestellt werden. Es ist jedoch auch möglich, für einen Prototypen oder ein bestehendes Gerät einen komplett neuen, passenden Referenzdatenerzeuger zu erstellen. Mit Hilfe dieses Referenzdatenerzeugers kann ohne großen Aufwand durch Hinzufügen eines Analysemoduls eine Vorrichtung zum Testen eines Testobjekts bereitgestellt werden, wobei das Testobjekt zum Beispiel ein anderes Modell, ein Prototyp oder allgemein ein zu testendes Gerät sein kann.

Bei einigen weiteren Ausführungsbeispielen gemäß der Erfindung ist das Analysemodul ausgelegt, um, basierend auf einem Ereignis, bei Verletzung einer vorgeschriebenen Reihenfolge oder wenn der Testobjektausgangsdatenstrom innerhalb einer vorgeschriebenen Zeitdauer keinen passenden Teilreferenzdatenstrom zu einem gegebenenfalls gespeicherten Teiltestobjektausgangsdatenstrom aufweist, den gegebenenfalls gespeicherten Teiltestobjektausgangsdatenstrom einer Liste von gegebenenfalls ungültigen Datenströmen hinzuzufügen, zu markieren oder zu löschen.

Alternativ ist das Analysemodul ausgelegt, um, basierend auf einem Ereignis, bei Verletzung einer vorgeschriebenen Reihenfolge oder wenn der Testobjektausgangsdatenstrom innerhalb einer vorgeschriebenen Zeitdauer keinen passenden Teilreferenzdatenstrom zu einem gespeicherten Teiltestobjektausgangsdatenstrom aufweist, den gespeicherten Teiltestobjektausgangsdatenstrom einer Liste von ungültigen Datenströmen hinzuzufügen, als ungültig zu markieren oder zu löschen.

Bei einigen Ausführungsbeispielen gemäß der Erfindung ist das Analysemodul ausgelegt, um einen Teilreferenzdatenstrom, für den kein passender Teiltestobjektausgangsdatenstrom gespeichert ist, mit einem Teiltestobjektausgangsdatenstrom in der Liste von gegebenenfalls ungültigen Datenströmen oder mit einem markierten Teilreferenzdatenstrom zu vergleichen.

Alternativ ist das Analysemodul ausgelegt, um einen Teilreferenzdatenstrom, für den kein passender Teiltestobjektausgangsdatenstrom gespeichert ist, mit einem Teiltestobjektausgangsdatenstrom in der Liste von ungültigen Datenströmen oder mit einem als ungültig markierten Teilreferenzdatenstrom zu vergleichen.

Allgemein ist festzuhalten, dass sich der Begriff Sequenzen einerseits auf eine Abfolge von Teildatenströmen oder Nachrichten oder auf einen Weg durch eine Zustandsmaschine oder Zustandsautomaten beziehen kann.

Bei einigen Ausführungsbeispielen gemäß der Erfindung geben die erste Markierung und die zweite Markierung an, in welcher vorgeschriebenen zeitlichen Reihenfolge der erste Teilreferenzdatenstrom und der zweite Teilreferenzdatenstrom in dem Referenzdatenstrom 120 angeordnet sind, wenn eine zeitliche Reihenfolge vorgeschrieben ist.

Gemäß einem anderen Aspekt kann der erste Teilreferenzdatenstrom eine Mehrzahl von Unterteilreferenzdatenströmen aufweisen, wobei ein erster Unterteilreferenzdatenstrom eine erste erweiterte Markierung und ein zweiter Unterteilreferenzdatenstrom eine zweite erweiterte Markierung aufweist. Die erste erweiterte Markierung und die zweite erweiterte Markierung basieren auf der Markierung des ersten Teilreferenzdatenstroms und geben an, ob eine zeitliche Reihenfolge zwischen einem Auftreten des ersten Unterteilreferenzdatenstroms und einem Auftreten des zweiten Unterteilreferenzdatenstroms in dem Teilreferenzdatenstrom vorgeschrieben ist.

Weitere Ausführungsbeispiele gemäß der Erfindung beziehen sich auf einen Referenzdatenerzeuger, der eine Mehrzahl von Unterteilreferenzdatenerzeugern aufweist. Dabei gibt die erste erweiterte Markierung an, von welchem Unterteilreferenzdatenerzeuger der Mehrzahl von Unterteilreferenzdatenerzeugern der erste Unterteilreferenzdatenstrom erzeugt wurde, und die zweite erweiterte Markierung gibt an, von welchem Unterteilreferenzdatenerzeuger der Mehrzahl von Unterteilreferenzdatenerzeugern der zweite Unterteilreferenzdatenstrom erzeugt wurde.

Ferner kann ein Unterteilreferenzdatenstrom eines ersten Unterteilreferenzdatenerzeugers und ein Unterteilreferenzdatenstrom eines zweiten Unterteilreferenzdatenerzeugers auch keine vorgeschriebene zeitliche Reihenfolge zwischen dem Auftreten des Unterteilreferenzdatenstroms des ersten Unterteilreferenzdatenerzeugers und des Unterteilreferenzdatenstroms des zweiten Unterteilreferenzdatenerzeugers in dem Referenzdatenstrom aufweisen, wenn der erste Unterteilreferenzdatenerzeuger und der zweite Unterteilreferenzdatenerzeuger parallel zueinander Datenströme erzeugen.

Bei einigen Ausführungsbeispielen gemäß der Erfindung kann das Analysemodul (420) ausgelegt sein, um, basierend auf einem Ereignis, bei Verletzung einer vorgeschriebenen Reihenfolge oder wenn der Testobjektausgangsdatenstrom (404) innerhalb einer vorgeschriebenen Zeitdauer keinen passenden Teilreferenzdatenstrom zu einem gegebenenfalls gespeicherten Teiltestobjektausgangsdatenstrom aufweist, den gegebenenfalls gespeicherten Teiltestobjektausgangsdatenstrom einer Liste von gegebenenfalls ungültigen Datenströmen hinzuzufügen, zu markieren oder zu löschen.

Zusätzlich kann das Analysemodul 420 ausgelegt sein, um einen Teilreferenzdatenstrom, für den kein passender Teiltestobjektausgangsdatenstrom gespeichert ist, mit einem Teiltestobjektausgangsdatenstrom in der Liste von gegebenenfalls ungültigen Datenströmen oder mit einem markierten Teilreferenzdatenstrom zu vergleichen.

Gemäß einem weiteren Aspekt der Erfindung kann der Referenzdatenerzeuger 110 oder das Analysemodul 420 ausgelegt sein, um einem Teilreferenzdatenstrom eine Zeitinformation hinzuzufügen.

Bei einigen Ausführungsbeispielen gemäß der Erfindung umfasst die Vorrichtung einen Verzögerer, der ausgelegt ist, um den Testobjektausgangsdatenstrom zeitlich zu verzögern.

Entsprechend eines anderen Aspekt kann die Vorrichtung ein Filter aufweisen, wobei das Filter ausgelegt ist, um den Testobjektausgangsdatenstrom zu filtern.

Bei einigen Ausführungsbeispielen gemäß der Erfindung ist das Analysemodul 420 auch ausgelegt sein, um bei einem Vergleich eines Teilreferenzdatenstrom und eines Teiltestobjektausgangsdatenstroms einen Ähnlichkeitswert zu bestimmen und basierend auf dem Ähnlichkeitswert zu beurteilen, ob der Teilreferenzdatenstrom und der Teiltestobjektausgangsdatenstrom zueinander passen.

Einige weitere Ausführungsbeispiel gemäß der Erfindung umfassen eine zentrale Speichereinrichtung aufweisen, die ausgelegt ist, um den Referenzdatenstrom 120 und den Testobjektausgangsdatenstrom 404 zu speichern. Ferner ist die zentrale Speichereinrichtung ausgelegt ist, um den Referenzdatenstrom 120 und den Testobjektausgangsdatenstrom 404 zu einem späteren Zeitpunkt dem Analysemodul 420 zur Bewertung des Testobjekts 402 zur Verfügung zu stellen.

Einige Ausführungsbeispiele gemäß der Erfindung beziehen sich auf ein Verfahren zum Testen eines Testobjekts. Das Verfahren umfasst ein Speichern eines Teilreferenzdatenstroms und ein vergleichen eines Teiltestobjektausgangsdatenstroms mit einem gespeicherten Teilreferenzdatenstrom. Der Teiltestobjektausgangsdatenstrom ist ein Teil des Testobjektausgangsdatenstroms. Ferner umfasst das Verfahren ein Speichern des Teiltestobjektausgangsdatenstroms, falls bei dem Vergleich des Teiltestobjektausgangsdatenstroms mit den gespeicherten Teilreferenzdatenströmen kein passender Teilreferenzdatenstrom gefunden wird.

Gemäß einem weiteren Aspekt der Erfindung umfasst das Verfahren ein Hinzufügen einer Zeitinformation zu einem Teilreferenzdatenstrom und ein Hinzufügen einer Zeitinformation zu einem Teiltestobjektausgangsdatenstrom.

Gemäß einem anderen Aspekt kann das Verfahren auch ein Hinzufügen eines Teilreferenzdatenstroms in eine Liste von ungültigen Datenströmen umfassen, wenn der Testobjektausgangsdatenstrom innerhalb einer vorgeschriebenen Zeitdauer keinen passenden Teiltestobjektausgangsdatenstrom aufweist.

In der vorliegenden Anmeldung werden teilweise für Objekte und Funktionseinheiten, die gleiche oder ähnliche funktionelle Eigenschaften aufweisen, gleiche Bezugszeichen verwendet.

Insbesondere wird darauf hingewiesen, dass abhängig von den Gegebenheiten, das erfindungsgemäße Schema auch in Software implementiert sein kann. Die Implementation kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt, kann die Erfindung somit als ein Computerprogramm mit einem Programmcode zur Durchführung des Verfahrens realisiert werden, wenn das Computerprogrammprodukt auf einem Computer abläuft.

## Patentansprüche

1. Vorrichtung (400) zum Testen eines Testobjekts, mit folgenden Merkmalen:
einem Referenzdatenerzeuger (110), der ausgelegt ist, um basierend auf einem Eingangsdatenstrom (102) einen Referenzdatenstrom (120) zu erzeugen,
wobei der Referenzdatenstrom (120) eine Mehrzahl von Teilreferenzdatenströmen aufweist, wobei ein erster Teilreferenzdatenstrom eine erste Markierung und ein zweiter Teilreferenzdatenstrom eine zweite Markierung aufweist, wobei die erste Markierung und die zweite Markierung angeben, ob eine zeitliche Reihenfolge zwischen einem Auftreten des ersten Teilreferenzdatenstroms und einem Auftreten des zweiten Teilreferenzdatenstroms in dem Referenzdatenstrom (120) vorgeschrieben ist; und
einem Analysemodul (420), das ausgelegt ist, um basierend auf dem Referenzdatenstrom (120) und einem Testobjektausgangsdatenstrom (404) eine Bewertung des Testobjekts (402) zu ermöglichen,
wobei das Testobjekt (402) ausgelegt ist, um basierend auf dem Eingangsdatenstrom (102) den Testobjektausgangsdatenstrom (404) zu erzeugen,
wobei der Referenzdatenerzeuger (110) ein instrumentiertes Referenzmodell umfasst, wobei das instrumentierte Referenzmodell ein bestehendes Referenzmodell für das Testobjekt (402) umfasst, wobei das bestehende Referenzmodell die Mehrzahl von Teilreferenzdatenströmen erzeugt, und wobei das bestehende Referenzmodell durch Hinzufügen der eindeutigen Markierung zu jedem Teilreferenzdatenstrom instrumentiert ist,
wobei das Referenzmodell mehrere parallele Teilmodelle für Teile des Testobjekts aufweist, und wobei die Markierung eines Teilreferenzdatenstroms eine Information enthält, von welchem Teilmodell der Teilreferenzdatenstrom erzeugt wurde,
wobei, wenn der erste Teilreferenzdatenstrom und der zweite Teilreferenzdatenstrom von parallel arbeitenden Teilmodelle erzeugt werden, die erste Markierung und die zweite Markierung angeben, dass der erste Teilreferenzdatenstrom und der zweite Teilreferenzdatenstrom in beliebiger zeitlicher Reihenfolge zueinander in dem Referenzdatenstrom auftreten dürfen,
wobei, wenn der erste Teilreferenzdatenstrom und der zweite Teilreferenzdatenstrom von ein und demselben Teilmodell erzeugt werden, die erste Markierung und die zweite Markierung angeben, dass die zeitliche Reihenfolge des Auftretens des ersten Teilreferenzdatenstroms und des zweiten Teilreferenzdatenstroms in dem Referenzdatenstrom vorgeschrieben ist, und
wobei der Testobjektausgangsdatenstrom (404) eine Mehrzahl von Teiltestobjektausgangsdatenströmen, die jeweils einem Teil des Testobjekts zugeordnet sind, aufweist, und wobei das Analysemodul (420) die Teilreferenzdatenströme mit den Teiltestobjektausgangsdatenströmen vergleicht.

2. Vorrichtung gemäß Anspruch 1,
wobei die erste Markierung und die zweite Markierung angeben, in welcher vorgeschriebenen zeitlichen Reihenfolge der erste Teilreferenzdatenstrom und der zweite Teilreferenzdatenstrom in dem Referenzdatenstrom (120) angeordnet sind, wenn eine zeitliche Reihenfolge vorgeschrieben ist,
wobei das Referenzmodell hierarchisch geordnete Teilmodelle (610, 710, 720) umfasst, so dass eines oder mehrere der parallelen Teilmodelle des Referenzmodells mehrere untergeordnete Teilmodelle (710, 720) umfasst, und
wobei der erste Teilreferenzdatenstrom eine Mehrzahl von Unterteilreferenzdatenströmen aufweist, wobei ein erster Unterteilreferenzdatenstrom von einem ersten untergeordneten Teilmodell (710) erzeugt wird und eine erste erweiterte Markierung aufweist, und wobei ein zweiter Unterteilreferenzdatenstrom von einem zweiten untergeordneten Teilmodell (720) erzeugt wird und eine zweite erweiterte Markierung aufweist, wobei die erste erweiterte Markierung und die zweite erweiterte Markierung auf der Markierung des ersten Teilreferenzdatenstroms basieren und angeben, ob eine zeitliche Reihenfolge zwischen einem Auftreten des ersten Unterteilreferenzdatenstroms und einem Auftreten des zweiten Unterteilreferenzdatenstroms in dem Teilreferenzdatenstrom vorgeschrieben ist.

3. Vorrichtung gemäß Anspruch 2,
wobei die erste erweiterte Markierung angibt, von welchem untergeordneten Teilmodell (710, 720) der erste Unterteilreferenzdatenstrom erzeugt wurde, und die zweite erweiterte Markierung angibt, von welchem untergeordneten Teilmodell (710, 720) der zweite Unterteilreferenzdatenstrom erzeugt wurde, und
wobei der erste Unterteilreferenzdatenstrom und der zweite Unterteilreferenzdatenstrom keine vorgeschriebene zeitliche Reihenfolge in dem Referenzdatenstrom aufweisen, wenn die untergeordneten Teilmodelle (710, 720) parallel zueinander Datenströme erzeugen.

4. Vorrichtung gemäß einem der Ansprüche 1 bis 3, wobei ein Teilmodell des Referenzmodels einen ersten möglichen Zustand und einen zweiten möglichen Zustand aufweist, und ausgelegt ist, um bei einem Übergang von dem ersten Zustand in den zweiten Zustand einen Teilreferenzdatenstrom zu erzeugen, wobei der Teilreferenzdatenstrom eine Mehrzahl von Übergangsteilreferenzdatenströmen aufweist, wobei jeder Übergangsteilreferenzdatenstrom eine Markierung aufweist, wobei die Markierungen angeben, ob eine zeitliche Reihenfolge zwischen einem Auftreten der verschiedenen Übergangsteilreferenzdatenströme vorgeschrieben ist.

5. Vorrichtung gemäß einem der Ansprüche 1 bis 4, wobei bei dem Vergleich der Teilreferenzdatenströme und der Teiltestobjektausgangsdatenströme festgestellt wird, ob zu einem Teiltestobjektausgangsdatenstrom ein passender Teilreferenzdatenstrom vorhanden ist und ob die zeitliche Reihenfolge des Auftretens des Teiltestobjektausgangsdatenstroms in dem Testobjektdatenstrom mit der zeitlichen Reihenfolge des Auftretens des passenden Teilreferenzdatenstroms in dem Referenzdatenstrom übereinstimmt, falls eine zeitliche Reihenfolge vorgeschrieben ist.

6. Vorrichtung gemäß Anspruch 5, wobei, falls der erste Teilreferenzdatenstrom und der zweite Teilreferenzdatenstrom eine vorgeschriebene zeitliche Reihenfolge aufweisen, durch den Vergleich der Teilreferenzdatenströme und der Teiltestobjektausgangsdatenströme ein erster Teiltestobjektausgangsdatenstrom passend zu dem ersten Teilreferenzdatenstrom gefunden wird und ein zweiter Teiltestobjektausgangsdatenstrom passend zu dem zweiten Teilreferenzdatenstrom gefunden wird, und wobei festgestellt wird, ob die zeitliche Reihenfolge des ersten Teiltestobjektausgangsdatenstrom und des zweiten Teiltestobjektausgangsdatenstrom der zeitlichen Reihenfolge des ersten Teilreferenzdatenstroms und des zweiten Teilreferenzdatenstroms entspricht.

7. Vorrichtung gemäß einem der Ansprüche 1 bis 6, wobei das Analysemodul (420) ausgelegt ist, um
einen Teilreferenzdatenstrom zu speichern und einen Teiltestobjektausgangsdatenstrom mit einem gespeicherten Teilreferenzdatenstrom zu vergleichen, und um einen Teiltestobjektausgangsdatenstrom, für den kein passender Teilreferenzdatenstrom gespeichert ist, zu speichern, und/oder
um einen Teiltestobjektausgangsdatenstrom zu speichern und einen Teilreferenzdatenstrom mit einem gespeicherten Teiltestobjektausgangsdatenstrom zu vergleichen, und um einen Teilreferenzdatenstrom, für den kein passender Teiltestobjektausgangsdatenstrom gespeichert ist, zu speichern.

8. Vorrichtung gemäß Anspruch 7,
wobei das Analysemodul (420) ausgelegt ist, um, basierend auf einem Ereignis, bei Verletzung einer vorgeschriebenen Reihenfolge oder wenn der Testobjektausgangsdatenstrom (404) innerhalb einer vorgeschriebenen Zeitdauer keinen passenden Teiltestobjektausgangsdatenstrom zu einem gegebenenfalls gespeicherten Teilreferenzdatenstrom aufweist, den gegebenenfalls gespeicherten Teilreferenzdatenstrom einer Liste von ungültigen Datenströmen hinzuzufügen, als ungültig zu markieren oder zu löschen, und
wobei das Analysemodul (420) ausgelegt ist, um einen Teiltestobjektausgangsdatenstrom, für den kein passender Teilreferenzdatenstrom gespeichert ist, mit einem Teilreferenzdatenstrom in der Liste von ungültigen Datenströmen oder mit einem als ungültig markierten Teilreferenzdatenstrom zu vergleichen.

9. Vorrichtung gemäß Anspruch 7 oder 8,
wobei das Analysemodul (420) ausgelegt ist, um, basierend auf einem Ereignis, bei Verletzung einer vorgeschriebenen Reihenfolge oder wenn der Testobjektausgangsdatenstrom (404) innerhalb einer vorgeschriebenen Zeitdauer keinen passenden Teilreferenzdatenstrom zu einem gegebenenfalls gespeicherten Teiltestobjektausgangsdatenstrom aufweist, den gegebenenfalls gespeicherten Teiltestobjektausgangsdatenstrom einer Liste von gegebenenfalls ungültigen Datenströmen hinzuzufügen, zu markieren oder zu löschen, und
wobei das Analysemodul (420) ausgelegt ist, um einen Teilreferenzdatenstrom, für den kein passender Teiltestobjektausgangsdatenstrom gespeichert ist, mit einem Teiltestobjektausgangsdatenstrom in der Liste von gegebenenfalls ungültigen Datenströmen oder mit einem markierten Teilreferenzdatenstrom zu vergleichen.

10. Vorrichtung gemäß Anspruch 8 oder 9, mit einem Ereignisdetektor, der ausgelegt ist, um basierend auf dem Testobjektausgangsdatenstrom (404) das Ereignis zu erkennen,
wobei das Ereignis einen Zustand des Testobjekts (402) verändert hat, und wobei der Ereignisdetektor ausgelegt ist, um bei dem Referenzdatenerzeuger (110) eine entsprechende Zustandsveränderung zu veranlassen.

11. Verfahren (1600) zum Testen eines Testobjekts mit folgenden Schritten:
Erzeugen (1610) eines Referenzdatenstroms basierend auf einem Eingangsdatenstrom, wobei der Referenzdatenstrom eine Mehrzahl von Teilreferenzdatenströmen aufweist, wobei ein erster Teilreferenzdatenstrom eine erste Markierung und ein zweiter Teilreferenzdatenstrom eine zweite Markierung aufweist, wobei die erste Markierung und die zweite Markierung angeben, ob eine zeitliche Reihenfolge zwischen einem Auftreten des ersten Teilreferenzdatenstroms und einem Auftreten des zweiten Teilreferenzdatenstroms in dem Referenzdatenstrom vorgeschrieben ist; und
Bewerten (1620) des Testobjekts basierend auf dem Referenzdatenstrom und einem Testobjektausgangsdatenstrom, wobei das Testobjekt ausgelegt ist, um basierend auf dem Eingangsdatenstrom den Testobjektausgangsdatenstrom zu erzeugen,
wobei die Mehrzahl von Teilreferenzdatenströmen durch ein instrumentiertes Referenzmodell erzeugt werden, wobei das instrumentierte Referenzmodell ein bestehendes Referenzmodell für das Testobjekt (402) umfasst, und wobei das bestehende Referenzmodell durch Hinzufügen der eindeutigen Markierung zu jedem Teilreferenzdatenstrom instrumentiert ist,
wobei das Referenzmodell mehrere parallele Teilmodelle für Teile des Testobjekts aufweist, und wobei die Markierung eines Teilreferenzdatenstroms eine Information enthält, von welchem Teilmodell der Teilreferenzdatenstrom erzeugt wurde,
wobei, wenn der erste Teilreferenzdatenstrom und der zweite Teilreferenzdatenstrom von parallel arbeitenden Teilmodelle erzeugt werden, die erste Markierung und die zweite Markierung angeben, dass der erste Teilreferenzdatenstrom und der zweite Teilreferenzdatenstrom in beliebiger zeitlicher Reihenfolge zueinander in dem Referenzdatenstrom auftreten dürfen,
wobei, wenn der erste Teilreferenzdatenstrom und der zweite Teilreferenzdatenstrom von ein und demselben Teilmodell erzeugt werden, die erste Markierung und die zweite Markierung angeben, dass die zeitliche Reihenfolge des Auftretens des ersten Teilreferenzdatenstroms und des zweiten Teilreferenzdatenstroms in dem Referenzdatenstrom vorgeschrieben ist,
wobei der Testobjektausgangsdatenstrom (404) eine Mehrzahl von Teiltestobjektausgangsdatenströmen, die jeweils einem Teil des Testobjekts zugeordnet sind, aufweist, und
wobei das Bewerten (1620) des Testobjekts einen Vergleich der Teilreferenzdatenströme mit den Teiltestobjektausgangsdatenströmen umfasst.

12. Computerprogramm mit einem Programmcode zur Durchführung des Verfahrens nach Anspruch 11, wenn das Computerprogramm auf einem Computer oder Mikrocontroller abläuft.

## Claims

1. Device (400) for testing a test object, comprising:
a reference data generator (110) configured to generate a reference data stream (120) on the basis of an input data stream (102),
wherein the reference data stream (120) comprises a plurality of partial reference data streams, wherein a first partial reference data stream comprises a first marker and a second partial reference data stream comprises a second marker, wherein the first marker and the second marker indicate if a temporal order between an occurrence of the first partial reference data stream and an occurrence of the second partial reference data stream in the reference data stream (120) is prescribed; and
an analysis module (420) configured to enable an evaluation of the test object (402) on the basis of the reference data stream (120) and a test object output data stream (404),
wherein the test object (402) is configured to generate the test object output data stream (404) on the basis of the input data stream (102),
wherein the reference data generator (110) includes an instrumented reference model, wherein the instrumented reference model includes an existing reference model for the test object (402), wherein the existing reference model generates a plurality of partial reference data streams, and wherein the existing reference model is instrumented by adding the unique marker to each partial reference data stream,
wherein the reference model comprises several parallel partial models for parts of the test object, and wherein the marker of a partial reference data stream includes information as to which partial model generated the partial reference data stream,
wherein, if the first partial reference data stream and the second partial reference data stream are generated by partial models operating in parallel, the first marker and the second marker indicate that the first partial reference data stream and the second partial reference data stream may occur in any temporal order in the reference data stream,
wherein, if the first partial reference data stream and the second partial reference data stream are generated by the same partial model, the first marker and the second marker indicate that the temporal order of the occurrence of the first partial reference data stream and the second partial reference data stream in the reference data stream is prescribed, and
wherein the test object output data stream (404) comprises a plurality of partial test object output data streams, each being assigned to a part of the test object, and wherein the analysis module (420) compares the partial reference data streams with the partial test object output data streams.

2. Device according to claim 1,
wherein the first marker and the second marker indicate in which prescribed temporal order the first partial reference data stream and the second partial reference data stream are arranged in the reference data stream (120) if a temporal order is prescribed,
wherein the reference model includes hierarchically sorted partial models (610, 710, 720) so that one or several of the parallel partial models of the reference model include several subordinate partial models (710, 720), and
wherein the first partial reference data stream comprises a plurality of sub-partial reference data streams, wherein a first sub-partial reference data stream is generated by a first subordinate partial model (710) and comprises a first extended marker, and wherein a second sub-partial reference data stream is generated by a second subordinate partial model (720) and comprises a second extended marker, wherein the first extended marker and the second extended marker are based on the marker of the first partial reference data stream and indicate if a temporal order between an occurrence of the first sub-partial reference data stream and an occurrence of the second sub-partial reference data stream in the partial reference data stream is prescribed.

3. Device according to claim 2,
wherein the first extended marker indicates which subordinate partial model (710, 720) generated the first sub-partial reference data stream, and wherein the second extended marker indicates which subordinate partial model (710, 720) generated the second sub-partial reference data stream, and
wherein the first sub-partial reference data stream and the second sub-partial reference data stream do not comprise any prescribed temporal order in the reference data stream if the subordinate partial model (710, 720) generates data streams in parallel to each other.

4. Device according to any one of claims 1 to 3, wherein a partial model of the reference model comprises a first possible state and a second possible state, and is configured to generate, upon transition of the first state to the second state, a partial reference data stream, wherein the partial reference data stream comprises a plurality of transition partial reference data streams, wherein each transition partial reference data stream comprises a marker, wherein the markers indicate if a temporal order between an occurrence of the different transition partial reference data streams is prescribed.

5. Device according to any one of claims 1 to 4, wherein in the comparison of the partial reference data streams and the partial test object output data streams it is determined if a partial reference data stream matching a partial test object output data stream is present and if the temporal order of the occurrence of the partial test object output data stream in the test object data stream coincides with the temporal order of the occurrence of the matching partial reference data stream in the reference data stream if a temporal order is prescribed.

6. Device according to claim 5, wherein, if the first partial reference data stream and the second partial reference data stream comprise a prescribed temporal order, a first partial test object output data stream matching the first partial reference data stream is found and a second partial test object output data stream matching the second partial reference data stream is found through the comparison of the partial reference data streams and the partial test object output data streams, and wherein it is determined if the temporal order of the first partial test object output data stream and the second partial test object output data stream coincides with the temporal order of the first partial reference data stream and the second partial reference data stream.

7. Device according to any one of claims 1 to 6, wherein the analysis module (420) is configured to:
store a partial reference data stream and compare a partial test object output data stream with a stored partial reference data stream, and to store a partial test object output data stream for which no matching partial reference data stream is stored, and/or
store a partial test object output data stream and compare a partial reference data stream with a stored partial test object output data stream, and to store a partial reference data stream for which no matching partial test object output data stream is stored.

8. Apparatus according to claim 7,
wherein the analysis module (420) is configured to, on the basis of an event, upon violation of a prescribed order or if the test object output data stream (404) does not comprise a matching partial test object output data stream to a possibly stored partial reference data stream within a prescribed duration, add the possibly stored partial reference data stream to a list of invalid data streams, to mark the same as invalid or to delete the same, and
wherein the analysis module (420) is configured to compare a partial test object output data stream for which no matching partial reference data stream is stored to a partial reference data stream in the list of invalid data streams or to a partial reference data stream marked as invalid.

9. Device according to claim 7 or 8,
wherein the analysis module (420) is configured to, on the basis of an event, upon violation of a prescribed order or if the test object output data stream (404) does not comprise a matching partial reference data stream to a possibly stored partial test object output data stream within a prescribed duration, add the possibly stored partial test object output data stream to a list of possibly invalid data streams, to mark the same or to delete the same, and
wherein the analysis module (420) is configured to compare a partial reference data stream for which no matching partial test object output data stream is stored to a partial test object output data stream in the list of possibly invalid data streams or to a marked partial reference data stream.

10. Apparatus according to claim 8 or 9 having an event detector configured to, on the basis of the test object output data stream (404), detect the event,
wherein the event has changed a state of the test object (402), and wherein the event detector is configured to prompt a corresponding change of state in the reference data generator (110).

11. Method (1600) for testing a test object, comprising:
generating (1610) a reference data stream on the basis of an input data stream, wherein the reference data stream comprises a plurality of partial reference data streams, wherein a first partial reference data stream comprises a first marker and a second partial reference data stream comprises a second marker, wherein the first marker and the second marker indicate if a temporal order between an occurrence of the first partial reference data stream and an occurrence of the second partial reference data stream in the reference data stream is prescribed; and
evaluating (1620) the test object on the basis of the reference data stream and a test object output data stream, wherein the test object is configured to generate the test object output data stream on the basis of the input data stream,
wherein the plurality of partial reference data streams are generated by an instrumented reference model, wherein the instrumented reference model includes an existing reference model for the test object (402), and wherein the existing reference model is instrumented by adding the unique marker to each partial reference data stream,
wherein the reference model comprises several parallel partial models for parts of the test object, and wherein the marker of a partial reference data stream includes information as to which partial model generated the partial reference data stream,
wherein, if the first partial reference data stream and the second partial reference data stream are generated by partial models operating in parallel, the first marker and the second marker indicate that the first partial reference data stream and the second partial reference data stream may occur in any temporal order with respect to each other in the reference data stream,
wherein, if the first partial reference data stream and the second partial reference data stream are generated by the same partial model, the first marker and the second marker indicate that the temporal order of the occurrence of the first partial reference data stream and of the second partial reference data stream in the reference data stream is prescribed,
wherein the test object output data stream (404) comprises a plurality of partial test object output data streams, each being associated to a part of the test object, and
wherein evaluating (1620) the test object includes a comparison of the partial reference data streams and the partial test object output data streams.

12. Computer program having a program code for executing the method according to claim 11, when the computer program runs on a computer or microcontroller.

## Revendications

1. Dispositif (400) pour tester un objet de test, aux caractéristiques suivantes:
un générateur de données de référence (110) qui est conçu pour générer un flux de données de référence (120) sur base d'un flux de données d'entrée (102),
dans lequel le flux de données de référence (120) présente une pluralité de flux de données de référence partiels, où un premier flux de données de référence partiel présente un premier marquage et un deuxième flux de données de référence partiel présente un deuxième marquage, où le premier marquage et le deuxième marquage indiquent s'il est prescrit un ordre chronologique entre une occurrence du premier flux de données de référence partiel et une occurrence du deuxième flux de données de référence partiel dans le flux de données de référence (120); et
un module d'analyse (420) qui est conçu pour permettre une évaluation de l'objet de test (402) sur base du flux de données de référence (120) et d'un flux de données de sortie d'objet de test (404),
dans lequel l'objet de test (402) est conçu pour générer, sur base du flux de données d'entrée (102), le flux de données de sortie d'objet de test (404),
dans lequel le générateur de données de référence (110) comporte un modèle de référence instrumenté, où le modèle de référence instrumenté comporte un modèle de référence existant pour l'objet de test (402), où le modèle de référence existant génère la pluralité de flux de données de référence partiels, et où le modèle de référence existant est instrumenté par addition du marquage univoque à chaque flux de données de référence partiel,
dans lequel le modèle de référence présente plusieurs modèles partiels parallèles pour des parties de l'objet de test, et dans lequel le marquage d'un flux de données de référence partiel contient une information indiquant le modèle partiel à partir duquel a été généré le flux de données de référence partiel;
dans lequel, lorsque le premier du flux de données de référence partiel et le deuxième flux de données de référence partielle sont générés à partir de modèles partiels fonctionnant en parallèle, le premier marquage et le deuxième marquage indiquent que le premier flux de données de référence partiel et le deuxième flux de données de référence partiel peuvent se présenter selon un ordre chronologique quelconque entre eux dans le flux de données de référence,
dans lequel, lorsque le premier flux de données de référence partiel et le deuxième flux de données de référence partiel sont générés à partir d'un même modèle partiel, le premier marquage et le deuxième marquage indiquent que l'ordre chronologique d'occurrence du premier flux de données de référence partiel et du deuxième flux de données de référence partiel est prescrit dans le flux de données de référence, et
dans lequel le flux de données de sortie d'objet de test (404) présente une pluralité de flux de données de sortie d'objet de test partiels qui sont, chacun, associés à une partie de l'objet de test, et dans lequel le module d'analyse (420) compare les flux de données de référence partiels avec les flux de données de sortie d'objet de test partiels.

2. Dispositif selon la revendication 1,
dans lequel le premier marquage et le deuxième marquage indiquent l'ordre chronologique prescrit selon lequel le premier flux de données de référence partiel et le deuxième flux de données de référence partiel sont disposés dans le flux de données de référence (120) lorsqu'il est prescrit un ordre chronologique,
dans lequel le modèle de référence comporte des modèles partiels (610, 710, 720) ordonnés hiérarchiquement, de sorte que l'un ou plusieurs des modèles partiels parallèles du modèle de référence comportent plusieurs modèles partiels subordonnés (710, 720), et
dans lequel le premier flux de données de référence partiel présente une pluralité de flux de données de référence partiels subordonnés, où un premier flux de données de référence partiel subordonné est généré à partir d'un premier modèle partiel subordonné (710) et présente un premier marquage étendu, et dans lequel un deuxième flux de données de référence partiel subordonné est généré à partir d'un deuxième modèle partiel subordonné (720) et présente un deuxième marquage étendu, dans lequel le premier marquage étendu et le deuxième marquage étendu sont basés sur le marquage du premier flux de données de référence partiel et indiquent s'il est prescrit un ordre chronologique entre une occurrence du premier flux de données de référence partiel et une occurrence du deuxième flux de données de référence partiel subordonné dans le flux de données de référence partiel.

3. Dispositif selon la revendication 2,
dans lequel le premier marquage étendu indique le modèle partiel subordonné (710, 720) à partir duquel a été généré le premier flux de données de référence partiel subordonné, et le deuxième marquage étendu indique le modèle partiel subordonné (710, 720) à partir duquel base a été généré le deuxième flux de données de référence partiel subordonné, et
dans lequel le premier flux de données de référence partiel subordonné et le deuxième flux de données de référence partiel subordonné ne présentent pas d'ordre chronologique prescrit dans le flux de données de référence lorsque les modèles partiels subordonnés (710, 720) génèrent des flux de données de manière parallèle entre eux.

4. Dispositif selon l'une des revendications 1 à 3, dans lequel un modèle partiel du modèle de référence présente un premier état possible et un deuxième état possible, et est conçu pour générer, lors d'une transition du premier état au deuxième état, un flux de données de référence partiel, où le flux de données de référence partiel présente une pluralité de flux de données de référence partiels de transition, où chaque flux de données de référence partiel de transition présente un marquage, où les marquages indiquent s'il est prescrit un ordre chronologique entre une occurrence des différents flux de données de référence partiels de transition.

5. Dispositif selon l'une des revendications 1 à 4, dans lequel il est observé, lors de la comparaison des flux de données de référence partiels et des flux de données de sortie d'objet de test partiels si pour un flux de données de sortie d'objet de test est présent un flux de données de référence partiel approprié et si l'ordre chronologique de l'occurrence du flux de données de sortie d'objet de test partiel dans le flux de données de l'objet de test coïncide avec l'ordre chronologique de l'occurrence du flux de données de référence partiel approprié dans le flux de données de référence lorsqu'il est prescrit un ordre chronologique.

6. Dispositif selon la revendication 5, dans lequel, si le premier flux de données de référence partiel et le deuxième flux de données de référence partiel présentent un ordre chronologique prescrit, il est trouvé, par la comparaison des flux de données de référence partiels avec les des flux de données de sortie d'objet de test partiels, un premier flux de données de sortie d'objet de test partiel qui coïncide avec le premier flux de données de référence partiel et il est trouvé un deuxième flux de données de sortie d'objet de test partiel qui coïncide avec le deuxième flux de données de référence partiel, et dans lequel il est observé si l'ordre chronologique du premier flux de données de sortie d'objet de test partiel et le deuxième flux de données de sortie d'objet de test partiel correspond à l'ordre chronologique du premier flux de données de référence partiel et du deuxième flux de données de référence partiel.

7. Dispositif selon l'une des revendications 1 à 6, dans lequel le module d'analyse (420) est conçu, pour
mémoriser un flux de données de référence partiel et pour comparer un flux de données de sortie d'objet de test partiel avec un flux de données de référence partiel mémorisé, et pour mémoriser un flux de données de sortie d'objet de test partiel pour lequel n'est pas mémorisé de flux de données de référence partiel approprié, et/ ou
pour mémoriser un flux de données de sortie d'objet de test partiel et pour comparer un flux de données de référence partiel avec un flux de données de sortie d'objet de test partiel mémorisé, et pour mémoriser un flux de données de référence partiel pour lequel n'est pas mémorisé de flux de données de sortie d'objet de test partiel approprié.

8. Dispositif selon la revendication 7,
dans lequel le module d'analyse (420) est conçu pour ajouter, sur base d'un événement, en cas de violation d'un ordre chronologique prescrit ou lorsque le flux de données de sortie d'objet de test (404) ne présente, dans un laps de temps prescrit, pas de flux de données de sortie d'objet de test partiel coïncidant avec un flux de données de référence partiel éventuellement mémorisé, le flux de données de référence partiel mémorisé à une liste de flux de données non valides, le marquer comme non valide ou le supprimer, et
dans lequel le module d'analyse (420) est conçu pour comparer un flux de données de sortie d'objet de test partiel pour lequel n'est pas mémorisé de flux de données de référence partiel approprié avec un flux de données de référence partiel dans la liste de flux de données non valides ou avec un flux de données de référence partiel marqué comme non valide.

9. Dispositif selon la revendication 7 ou 8,
dans lequel le module d'analyse (420) est conçu pour ajouter, marquer ou supprimer, sur base d'un événement, en cas de violation d'un ordre chronologique prescrit ou lorsque le flux de données de sortie d'objet de test (404) ne présente, dans un laps de temps prescrit, pas de flux de données de référence partiel approprié pour un flux de données de sortie d'objet de test partiel éventuellement mémorisé, le flux de données de sortie d'objet de test partiel éventuellement mémorisé d'une liste de flux de données éventuellement non valides, et
dans lequel le module d'analyse (420) est conçu pour comparer un flux de données de référence partiel pour lesquelles n'est pas mémorisé de flux de données de sortie d'objet de test partiel approprié avec un flux de données de sortie d'objet de test partiel dans la liste de flux de données éventuellement non valides ou avec un flux de données de référence partiel marqué.

10. Dispositif selon la revendication 8 ou 9, avec un détecteur d'événement conçu pour reconnaître l'événement sur base du flux de données de sortie d'objet de test (404),
dans lequel l'événement a modifié un état de l'objet de test (402), et dans lequel le détecteur d'événement est conçu pour provoquer dans le générateur de données de référence (110) un changement d'état correspondant.

11. Procédé (1600) pour tester un objet de test, aux étapes suivantes consistant à:
générer (1610) un flux de données de référence sur base d'un flux de données d'entrée, où le flux de données de référence présente une pluralité de flux de données de référence partiels, où un premier flux de données de référence partiel présente un premier marquage et un deuxième flux de données de référence partiel présente un deuxième marquage, où le premier marquage et le deuxième marquage indiquent s'il est prescrit un ordre chronologique entre une occurrence du premier flux de données de référence partiel et une occurrence du deuxième flux de données de référence partiel dans le flux de données de référence; et
évaluer (1620) l'objet de test sur base du flux de données de référence et d'un flux de données de sortie d'objet de test, où l'objet de test est conçu pour générer le flux de données de sortie d'objet de test sur base du flux de données d'entrée,
dans lequel la pluralité de flux de données de référence partiels sont générées par un modèle de référence instrumenté, où le modèle de référence instrumenté comporte un modèle de référence existant pour l'objet de test (402), et où le modèle de référence existant est instrumenté par ajoute du marquage univoque à chaque flux de données de référence partiel,
dans lequel le modèle de référence présente plusieurs modèles partiels parallèles pour des parties de l'objet de test, et où le marquage d'un flux de données de référence partiel contient une information sur le modèle partiel à partir duquel a été généré le flux de données de référence partiel,
dans lequel, lorsque le premier flux de données de référence partiel et le deuxième flux de données de référence partiel sont générés par des modèles partiels fonctionnant en parallèle, le premier marqueur et le deuxième marqueur indiquent que le premier flux de données de référence partiel et le deuxième flux de données de référence partiel peuvent se présenter dans un ordre chronologique quelconque entre eux dans le flux de données de référence,
dans lequel, lorsque le premier flux de données de référence partiel et le deuxième flux de données de référence partiel sont générés à partir d'un même modèle partiel, le premier marquage et le deuxième marquage indiquent que l'ordre chronologique d'occurrence du premier flux de données de référence partiel et du deuxième flux de données de référence partiel est prescrit dans le flux de données de référence,
dans lequel le flux de données de sortie d'objet de test (404) présente une pluralité de flux de données de sortie d'objet de test partiels associés, chacun, à une partie de l'objet de test, et
dans lequel l'évaluation de l'objet de test (1620) comporte une comparaison des flux de données de référence partiels avec les flux de données de sortie d'objet de test partiels.

12. Programme d'ordinateur avec un code de programme pour réaliser le procédé selon la revendication 11 lorsque le programme d'ordinateur est exécuté sur un ordinateur ou un microcontrôleur.
